(19) Europäisches Patentamt European Patent Office Office européen des brevets

(11) **EP 4 535 209 A1**

(12) **EUROPEAN PATENT APPLICATION**
published in accordance with Art. 153(4) EPC

(43) Date of publication:
09.04.2025 Bulletin 2025/15

(21) Application number: 23815122.9

(22) Date of filing: 29.05.2023

(51) International Patent Classification (IPC):
*G06F 21/60* (2013.01)

(52) Cooperative Patent Classification (CPC):
G06F 21/60; H04W 12/02; H04W 12/03;
H04W 12/041

(86) International application number:
PCT/CN2023/096721

(87) International publication number:
WO 2023/231939 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.06.2022 CN 202210618596

(71) Applicant: Vivo Mobile Communication Co., Ltd.
Dongguan, Guangdong 523863 (CN)

(72) Inventors:
• WANG, Hui
Dongguan, Guangdong 523863 (CN)
• KANG, Yanchao
Dongguan, Guangdong 523863 (CN)
• YU, Hang
Dongguan, Guangdong 523863 (CN)

(74) Representative: Shieldmark
P.O. Box 90471
2509 LL The Hague (NL)

(54) **SERVICE PROCESSING METHOD AND APPARATUS, NETWORK DEVICE AND STORAGE MEDIUM**

(57) This application pertains to the field of communication technologies and discloses a service processing method. The method includes: receiving, by a first network device, a service processing request of a second network device for a target privacy protection service; obtaining a target privacy processing model obtained through joint training with the second network device; and performing, by using the target privacy processing model, privacy processing on network data related to the target privacy protection service, and then transmitting the network data to the second network device. This application pertains to the field of communication technologies and further discloses a service processing method. The method includes: transmitting, by a second network device, a service processing request for a target privacy protection service to a first network device; and receiving a service processing result returned by the first network device, where the service processing result is a result obtained after privacy processing is performed, by using a target privacy processing model, on network data related to the target privacy protection service after the first network device obtains the target privacy processing model obtained through joint training with the second network device.

```
A first network device receives a service processing request of a
second network device for a target privacy protection service          S210

The first network device obtains, based on the service processing
request, a target privacy processing model obtained through joint        S220
training with the second network device

The first network device performs, by using the target privacy
processing model, privacy processing on network data related to the      S230
target privacy protection service, and then transmits the network
data to the second network device
```

FIG. 2

**Description**

**CROSS-REFERENCE TO RELATED APPLICATIONS**

This application claims priority to Chinese Patent Application No. 202210618596.6, filed with the China National Intellectual Property Administration on June 1, 2022 and entitled "SERVICE PROCESSING METHOD AND APPARATUS, NETWORK DEVICE, AND STORAGE MEDIUM", which is incorporated herein by reference in its entirety.

**TECHNICAL FIELD**

This application pertains to the field of communication technologies, and specifically relates to a service processing method and apparatus, a network device, and a storage medium.

**BACKGROUND**

With fast development of communication technologies, a communication network is also constantly updated, data of various types in the communication network is gradually increased, and plenty of internal data may provide help for external applications.

Currently, the communication network provides only some public data for the external applications, but plenty of internal data related to privacy such as network implementation and network planning cannot be provided for the external applications for use. In other words, the current communication network can provide little data for the external applications for use, and plenty of internal data of the communication network cannot be effectively used. Therefore, data utilization is low.

**SUMMARY**

Embodiments of this application provide a service processing method and apparatus, a network device, and a storage medium to resolve a problem that data utilization is low because internal data of a communication network cannot be effectively used.

According to a first aspect, a service processing method is provided. The method includes:

receiving, by a first network device, a service processing request of a second network device for a target privacy protection service;
obtaining, by the first network device based on the service processing request, a target privacy processing model obtained through joint training with the second network device; and
performing, by the first network device by using the target privacy processing model, privacy processing on network data related to the target privacy protection service, and then transmitting the network data to the second network device.

According to a second aspect, a service processing apparatus is provided. The apparatus includes:

a first receiving module, configured to receive a service processing request of a second network device for a target privacy protection service;
a first obtaining module, configured to obtain, based on the service processing request, a target privacy processing model obtained through joint training with the second network device; and
a first processing module, configured to perform, by using the target privacy processing model, privacy processing on network data related to the target privacy protection service, and then transmit the network data to the second network device.

According to a third aspect, a service processing method is provided. The method includes:

transmitting, by a second network device, a service processing request for a target privacy protection service to a first network device; and
receiving, by the second network device, a service processing result returned by the first network device, where the service processing result is a result obtained after privacy processing is performed, by using a target privacy processing model, on network data related to the target privacy protection service after the first network device obtains, based on the service processing request, the target privacy processing model obtained through joint training with the second network device.

According to a fourth aspect, a service processing apparatus is provided. The apparatus includes:

a third transmitting module, configured to transmit a service processing request for a target privacy protection service to a first network device; and

a second receiving module, configured to receive a service processing result returned by the first network device, where the service processing result is a result obtained after privacy processing is performed, by using a target privacy processing model, on network data related to the target privacy protection service after the first network device obtains, based on the service processing request, the target privacy processing model obtained through joint training with the service processing apparatus.

According to a fifth aspect, a network device is provided. The network device includes a processor and a memory. The memory stores a program or instructions capable of running on the processor. When the program or instructions are executed by the processor, the steps of the service processing method according to the first aspect are implemented, or the steps of the service processing method according to the third aspect are implemented.

According to a sixth aspect, a readable storage medium is provided. The readable storage medium stores a program or instructions. When the program or instructions are executed by a processor, the steps of the service processing method according to the first aspect are implemented, or the steps of the service processing method according to the third aspect are implemented.

According to a seventh aspect, a computer program or program product is provided. The computer program or program product is stored in a storage medium. The computer program or program product is executed by at least one processor to implement the service processing method according to the first aspect or implement the service processing method according to the third aspect.

In the embodiments of this application, after receiving the service processing request of the second network device for the target privacy protection service, the first network device obtains, based on the service processing request, the target privacy processing model obtained through joint training with the second network device, then performs, by using the target privacy processing model, privacy processing on the network data related to the target privacy protection service, and then transmits the network data to the second network device. In other words, privacy processing is first performed, by using the target privacy processing model obtained through joint training with the second network device, on the network data related to the target privacy protection service requested by the second network device, and then the network data is provided for the second network device. This can better protect privacy of internal data of the network and increase an amount of data that a communication network can provide for external applications for use. Therefore, plenty of internal data of the communication network can be effectively used and data utilization can be improved.

## BRIEF DESCRIPTION OF DRAWINGS

FIG. 1 is a schematic structural diagram of a wireless communication system to which an embodiment of this application can be applied;

FIG. 2 is an implementation flowchart of a service processing method according to an embodiment of this application;

FIG. 3 is a schematic diagram of a service processing procedure performed by a first network device as a coordinator of joint training according to an embodiment of this application;

FIG. 4 is a schematic diagram of a process of encrypting and transmitting processing result 2 in FIG. 3;

FIG. 5 is a schematic diagram of a process of encrypting and transmitting intermediate processing result 2 in FIG. 3;

FIG. 6 is a schematic diagram of a service processing procedure performed by a second network device as a coordinator of joint training according to an embodiment of this application;

FIG. 7 is a schematic diagram of a process of encrypting and transmitting processing result 3 in FIG. 6;

FIG. 8 is a schematic diagram of a process of encrypting and transmitting intermediate processing result 3 in FIG. 6;

FIG. 9 is a schematic structural diagram of a service processing apparatus according to an embodiment of this application;

FIG. 10 is an implementation flowchart of another service processing method according to an embodiment of this application;

FIG. 11 is a schematic structural diagram of another service processing apparatus according to an embodiment of this application;

FIG. 12 is a schematic structural diagram of a network device according to an embodiment of this application; and

FIG. 13 is another schematic structural diagram of a network device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

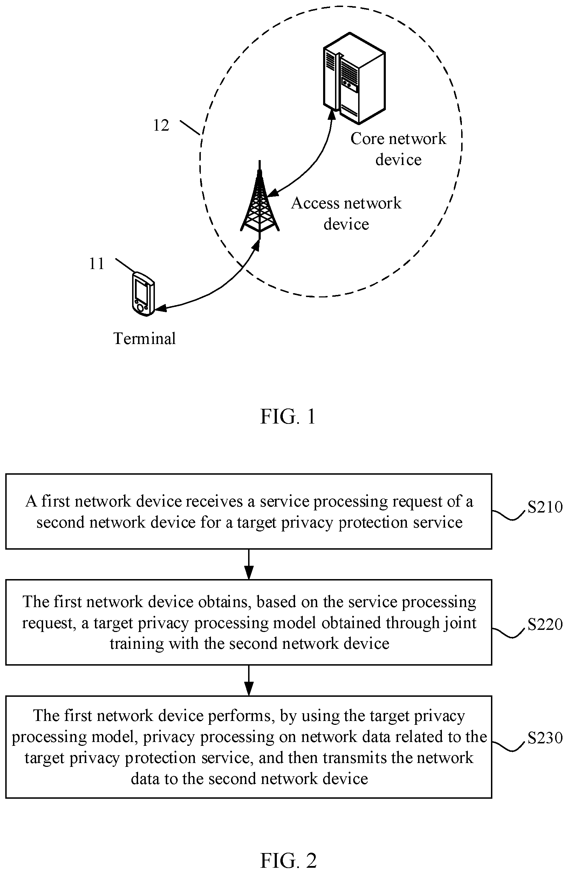

FIG. 1 is a schematic structural diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device and a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

A service processing method provided in the embodiments of this application is hereinafter described in detail by using some embodiments and application scenarios thereof with reference to the accompanying drawings.

FIG. 2 is an implementation flowchart of a service processing method according to an embodiment of this application. The method may include the following steps.

S210: A first network device receives a service processing request of a second network device for a target privacy protection service.

In this embodiment of this application, the first network device may be the network-side device 12 shown in FIG. 1, and specifically, may be any existing network element in the communication network, such as an AMF, an SMF, a UDM, or a PCF in a 3GPP network, or may be a new network element in the communication network, which is an internal device of the communication network.

The second network device may be an external application function device, for example, an AF device such as a video server or a game server, and is interconnected with an external application.

The second network device may transmit the service processing request for the target privacy protection service to the first network device based on an actual requirement. The target privacy protection service may be a service such as beam optimization management, user location recommendation, or UE fitness probability estimation. The service processing request may be a request for related data of the corresponding service or a request for processing result data of the corresponding service.

After the first network device receives the service processing request transmitted by the second network device for the target privacy protection service, the first network device may continue to perform operations of subsequent steps.

S220: The first network device obtains, based on the service processing request, a target privacy processing model obtained through joint training with the second network device.

In this embodiment of this application, the first network device may perform joint training with the second network device to obtain the target privacy processing model. The target privacy processing model may be obtained through joint training based on a previous service processing request or obtained through real-time joint training based on a current service processing request. Different privacy protection services may correspond to different privacy processing models.

After receiving the service processing request of the second network device for the target privacy protection service, the first network device may obtain, based on the service processing request, the target privacy processing model obtained through joint training with the second network device, where the target privacy processing model corresponds to the target privacy protection service.

The service processing request may carry device identification information of the second network device, service identification information of the target privacy protection service, privacy processing description reference information, and the like. The first network device may obtain, based on related information carried in the service processing request, the target privacy processing model obtained through joint training with the second network device.

S230: The first network device performs, by using the target privacy processing model, privacy processing on network data related to the target privacy protection service, and then transmits the network data to the second network device.

After the first network device obtains, based on the service processing request transmitted by the second network device for the target privacy protection service, the target privacy processing model obtained through joint training with the second network device, the first network device may further perform, by using the target privacy processing model, privacy processing on the network data related to the target privacy protection service to obtain a service processing result, and then transmit the service processing result to the second network device.

In other words, the first network device may directly use the target privacy processing model to perform privacy processing on the network data related to the target privacy protection service. Specifically, the network data related to the target privacy protection service may be input into the target privacy processing model, and an output result of the target privacy processing model may be obtained after privacy processing of the target privacy processing model, where the output result is the service processing result obtained after privacy processing is performed on the network data related to the target privacy protection service.

After the first network device obtains, based on the service processing request, the target privacy processing model obtained through joint training with the second network device, the first network device may simply and quickly use the target privacy processing model to perform privacy processing on the network data related to the target privacy protection service, thereby improving data processing efficiency. Moreover, the target privacy processing model is obtained through joint training by the first network device and the second network device. After the first network device performs, by using the target privacy processing model, privacy processing on the network data related to the target privacy protection service, the first network device transmits the service processing result to the second network device. Therefore, it can be ensured that the second network device can normally use the service processing result, and availability of the data is improved.

The network data related to the target privacy protection service is internal data of the communication network. If the network data is directly provided for the external application for use, a security risk may be caused to the communication network. For example, the target privacy protection service is beam optimization management, and the network data related to this service is a beam angle. The data is related to implementation of a base station. If the data is provided directly, a security risk may be caused to the base station. Therefore, the network data related to the target privacy protection service cannot be directly provided for the external application. After the first network device performs, by using the target privacy processing model, privacy processing on the network data related to the target privacy protection service, the network data is transmitted to the second network device and provided for the external application for use. This can effectively protect privacy of the internal data of the network. Because the first network device can perform privacy processing on the network data related to the target privacy protection service, the first network device can provide more internal data of the network for external applications for use, to improve data utilization.

By using the method provided in this embodiment of this application, after receiving the service processing request of the second network device for the target privacy protection service, the first network device obtains, based on the service processing request, the target privacy processing model obtained through joint training with the second network device, then performs, by using the target privacy processing model, privacy processing on the network data related to the target privacy protection service, and then transmits the network data to the second network device. In other words, privacy processing is first performed, by using the target privacy processing model obtained through joint training with the second network device, on the network data related to the target privacy protection service requested by the second network device, and then the network data is provided for the second network device. This can better protect privacy of internal data of the network and increase an amount of data that the communication network can provide for external applications for use. Therefore, plenty of internal data of the communication network can be effectively used and data utilization can be improved.

After receiving the service processing request of the second network device for the target privacy protection service, the first network device may determine, based on the service processing request, whether to perform real-time joint training, and if so, may perform real-time joint training with the second network device to obtain the target privacy processing model. Specifically, the first network device may perform joint training with the second network device in a manner of information interaction or the like to obtain the target privacy processing model.

Based on the service processing request, the first network device performs real-time joint training with the second network device to obtain the target privacy processing model. This can ensure that the target privacy processing model obtained through training can better meet the current service processing request.

In an embodiment of this application, that the first network device obtains, based on the service processing request, a target privacy processing model obtained through joint training with the second network device may include the following step:

The first network device performs, based on the service processing request, first iterative training on a first privacy processing initial model N times until a specified first training termination condition is met, to obtain the target privacy processing model, where N is a positive integer.

A process of first iterative training at an $i^{th}$ time may include the following steps.

Step 1: The first network device trains a first local model, and obtains a first processing result of first sample data at the $i^{th}$ time by using the trained first local model, where i = 1, 2, ..., N.

Step 2: The first network device obtains a second processing result at the $i^{th}$ time, where the second processing result at the $i^{th}$ time is a result obtained by the second network device by training a second local model and processing a processing result of second sample data based on the trained second local model.

Step 3: The first network device performs first iterative training on the first privacy processing initial model for the $i^{th}$ time based on the first processing result at the $i^{th}$ time, the second processing result at the $i^{th}$ time, and first label data.

For ease of description, the foregoing steps are combined for description.

In this embodiment of this application, the first network device may act as a coordinator (coordinator) of joint training, and the first network device takes the lead in joint training with the second network device to obtain the target privacy processing model.

The service processing request transmitted by the second network device and received by the first network device may carry the following information:

device identification information of the second network device, where if the second network device is an AF, the device identification information may be an AF ID;
service identification information of the target privacy protection service, where the service identification information may be used to identify the target privacy protection service that the second network device wants to request, such as beam optimization management, user location recommendation, or UE fitness probability estimation; and
privacy processing description reference information, where the reference information may include privacy protection level information, privacy protection processing mode description information, and the like.

The privacy protection level information may be defined by the communication network, for example, defined by the 3GPP. Protection intensity and exposed content of each privacy protection level are different. In principle, the higher the level, the less the exposed original data features and the higher the processing complexity.

The privacy protection processing mode description information may include the following information:

joint training indication information, used to indicate that the first network device and the second network device need to perform joint training to obtain the target privacy processing model for the target privacy protection service;

model type information or identification information, used to indicate an initial model used in model training, where for example, an initial model such as a heterogeneous neural network or a decision tree may be used;

model configuration information, matched and bound with the model type information or identification information, and used to indicate more specific parameters needed for model training, such as an assumed role and a split point;

model performance information, which may include a model convergence condition, iterative performance, model accuracy evaluation, and the like;

model training filtering information, which is used to define sample data requirements of model training and may include a sample data type, an amount of sample data, validity of sample data, and a range of sample data, such as sample data of target users (target UE(s)), a target time period, and a target area (target AOI), and may further include a sample data collection mode; and

model feedback report information, which is used to define a model feedback mode, such as a one-time feedback or multiple continuous update feedbacks, and may be further used to define feedback time information, such as a feedback deadline and a periodic feedback period.

The service processing request may carry all or part of the foregoing information, for example, carry only the device identification information of the second network device, the service identification information of the target privacy protection service, and the privacy protection level information. The first network device is capable of obtaining more information through parsing based on the information carried in the service processing request.

In addition, it should be noted that if the service processing request carries the privacy processing description reference information, the first network device may determine model training configuration information based on the privacy processing description reference information in combination with related preconfiguration information of the first network device. The model training configuration information may include the following information:

basic model information, where by parsing the service processing request, the first network device may obtain complexity and required data for completing the service processing task, and select, from a model library, a suitable basic model capable of completing the service processing task, where the basic model may be used as a basic model of the first local model of the first network device or a basic model of the first privacy processing initial model, and a basic model of the second local model of the second network device may be this basic model or another initial model determined by the second network device;

model configuration information, used to indicate more detailed information in the model training process, such as complexity, a learning capability, an assumed role (active party or passive party), and a split point (split point);

model training termination condition information, used to indicate to what extent the model training can be stopped, such as a model convergence condition, model accuracy, and the number of model iterations, which may be determined by the first network device based on preconfiguration information in an agreement (agreement) of the target privacy protection service for which the service processing request is intended or the privacy processing description reference information in the service processing request; and

sample data type information, used to indicate a sample data type and a sample source.

By exchanging information, the first network device and the second network device may share information such as model training configuration information and model training filtering information, so that the first network device and the second network device can perform information alignment during joint training to improve model training efficiency.

The first network device and the second network device may separately collect their sample data based on interaction information. The sample data collected by the first network device is the first sample data, and the sample data collected by the second network device is the second sample data. Both the first sample data and the second sample data may be a plurality of pieces of data. In addition, in this embodiment of this application, processing of sample data or processing results at each stage is performed with a single piece of sample data or a single processing result as a granularity, that is, each piece of sample data or each processing result is processed separately, and a processing result corresponding to each piece of sample data or each processing result is obtained.

Either of the first network device and the second network device may maintain a local model. A local model of the first network device is the first local model, and a local model of the second network device is the second local model. Basic models of the first local model and the second local model may be the same or different. In addition, the first network device may determine the first privacy processing initial model based on the basic model.

As the coordinator of joint training, the first network device may perform, based on the service processing request, first iterative training on the first privacy processing initial model N times until the specified first training termination condition is met, to obtain the target privacy processing model. N is not a predetermined value, but the total number of times of first iterative training completed when the first training termination condition is met. N is a positive integer. The first training termination condition may be determined based on the model training configuration information.

During first iterative training at the $i^{th}$ time, the first network device may train the first local model, and obtain the first processing result of the first sample data at the $i^{th}$ time by using the trained first local model. In addition, the second network device may train the second local model, obtain the second processing result at the $i^{th}$ time by processing the processing result of the second sample data based on the trained second local model, and transmit the second processing result at the $i^{th}$ time to the first network device, where i may be equal to 1, 2, ..., N.

In this way, the first network device obtains the first processing result at the $i^{th}$ time and the second processing result at the $i^{th}$ time. The first network device may perform first iterative training on the first privacy processing initial model for the $i^{th}$ time based on the first processing result at the $i^{th}$ time, the second processing result at the $i^{th}$ time, and the first label data. The first label data corresponds to an accurate classification result, which may be used as a criterion for adjusting model parameters in the process of model training. The first label data may include data in a public data set and historical data of the first network device.

In other words, in a process of performing first iterative training on the first privacy processing initial model for a first time, the first network device may train the first local model, and obtain a first processing result of the first sample data at the first time by using the trained first local model; the second network device may train the second local model, obtain a second processing result at the first time by processing the processing result of the second sample data based on the trained second local model, and transmit the second processing result at the first time to the first network device; and the first network device may perform first iterative training on the first privacy processing initial model for the first time based on the first processing result at the first time, the second processing result at the first time, and the first label data.

Similarly, in a process of performing first iterative training on the first privacy processing initial model for a second time, the first network device may train the first local model, and obtain a first processing result of the first sample data at the second time by using the trained first local model; the second network device may train the second local model, obtain a second processing result at the second time by processing the processing result of the second sample data based on the trained second local model, and transmit the second processing result at the second time to the first network device; and the first network device may perform first iterative training on the first privacy processing initial model for the second time based on the first processing result at the second time, the second processing result at the second time, and the first label data.

The iterative training proceeds sequentially and is not described in detail again.

The first network device performs, based on the service processing request, first iterative training on the first privacy processing initial model for a plurality of times jointly with the second network device, so that the target privacy processing model can be quickly obtained.

In an embodiment of this application, when i = 1, the first processing result at the $i^{th}$ time is a result obtained by the first network device by training the first local model by using the first sample data and processing the first sample data by using the trained first local model; and

the second processing result at the $i^{th}$ time is a result obtained by the second network device by training the second local model by using the second sample data and processing the processing result of the second sample data based on the trained second local model.

In this embodiment of this application, at the beginning of joint training, that is, during first iterative training at the first time, the first network device may first train the first local model by using the first sample data, for example, perform iterative training on the first local model; when a predetermined training termination condition is met, may stop training to obtain the trained first local model; and may further process the first sample data by using the trained first local model, to obtain the first processing result at the first time. Each piece of first sample data corresponds to a first processing result thereof at the first time.

Similarly, at the beginning of joint training, that is, during first iterative training at the first time, the second network device may first train the second local model by using the second sample data, for example, perform iterative training on the second local model; when a predetermined training termination condition is met, may stop training to obtain the trained second local model; and may further process the processing result of the second sample data based on the trained second local model, to obtain the second processing result at the first time. Each piece of second sample data corresponds to a second processing result thereof at the first time.

The training termination conditions in training of the first local model and the second local model may be the same or different.

The first network device may obtain the second processing result at the first time. In this way, the first network device obtains the first processing result at the first time and the second processing result at the first time, and may perform first iterative training on the first privacy processing initial model for the first time based on the first processing result at the first time, the second processing result at the first time, and the first label data.

At the beginning of joint training, the first network device and the second device train their local models by using their sample data, so that the corresponding processing results can be quickly obtained; and then the first network device trains the first privacy processing initial model to facilitate smooth joint training.

In an embodiment of this application, when $i = 2, 3, ..., N$, the first processing result at the $i^{th}$ time is a result obtained by the first network device by training the first local model by using a first intermediate processing result at an $(i-1)^{th}$ time and processing the first sample data by using the trained first local model;

the second processing result at the $i^{th}$ time is a result obtained by the second network device by training the second local model by using a second intermediate processing result at the $(i-1)^{th}$ time and processing the processing result of the second sample data based on the trained second local model;

the first intermediate processing result at the $(i-1)^{th}$ time is a result obtained by the first network device by processing a first processing result at the $(i-1)^{th}$ time by using the trained first privacy processing initial model after first iterative training is performed for the $(i-1)^{th}$ time; and

the second intermediate processing result at the $(i-1)^{th}$ time is a result obtained by the first network device by processing a processing result of a second processing result at the $(i-1)^{th}$ time based on the trained first privacy processing initial model after first iterative training is performed for the $(i-1)^{th}$ time.

In this embodiment of this application, as the coordinator of joint training, the first network device trains the first privacy processing initial model jointly with the second network device.

When $i = 2, 3, ..., N$, after the first network device performs first iterative training on the first privacy processing initial model for the $(i-1)^{th}$ time based on the first processing result at the $(i-1)^{th}$ time, the second processing result at the $(i-1)^{th}$ time, and the first label data, the first network device may obtain the first intermediate processing result at the $(i-1)^{th}$ time by processing the first processing result at the $(i-1)^{th}$ time by using the trained first privacy processing initial model. Specifically, the first intermediate processing result may correspond to a gradient of a loss function of the first privacy processing initial model with respect to parameters of the first local model.

In addition, the second intermediate processing result at the $(i-1)^{th}$ time may be obtained by processing the second processing result at the $(i-1)^{th}$ time based on the trained first privacy processing initial model and transmitted to the second network device. Specifically, the second intermediate processing result may correspond to a gradient of the loss function of the first privacy processing initial model with respect to parameters of the second local model.

The first network device may train the first local model by using the first intermediate processing result at the $(i-1)^{th}$ time, where the first local model is the first local model trained last time, and then the first local model is updated and trained this time by using the first intermediate processing result at the $(i-1)^{th}$ time. The first processing result at the $i^{th}$ time may be obtained by processing the first sample data by using the trained first local model.

Similarly, the second network device may train the second local model by using the second intermediate processing result at the $(i-1)^{th}$ time, where the second local model is the second local model trained last time, and then the second local model is updated and trained this time by using the second intermediate processing result at the $(i-1)^{th}$ time. The second sample data may be processed by using the trained second local model, and the second processing result at the $i^{th}$ time may be obtained based on this processing result and transmitted to the first network device.

Further, the first network device may perform first iterative training on the first privacy processing initial model for the $i^{th}$ time based on the first processing result at the $i^{th}$ time, the second processing result at the $i^{th}$ time, and the first label data.

The first network device and the second network device separately train their local models by using the intermediate processing results obtained based on the trained first privacy processing initial model, and then the first privacy processing initial model is trained based on the processing results of the trained local models and the first label data. This process is performed cyclically, so that the first training termination condition can be quickly met and that the target privacy processing model can be obtained.

When $i = 1, 2, ..., N$, the first network device performs first iterative training on the first privacy processing initial model for the $i^{th}$ time based on the first processing result at the $i^{th}$ time, the second processing result at the $i^{th}$ time, and the first label data. Specifically, the first network device may separately input the first processing result at the $i^{th}$ time and the second processing result at the $i^{th}$ time into the current first privacy processing initial model, obtain an output of the first privacy processing initial model after processing of the first privacy processing initial model, compare the output of the first privacy processing initial model with the first label data, and adjust parameters of the first privacy processing initial model based on a comparison result, so that the loss function of the first privacy processing initial model can be continuously converged.

A specific expression of the loss function $L$ may be:

$$L = \min_{\theta_A, \theta_B} \sum_i \left\| \theta_A x_i^A + \theta_B x_i^B - y_i \right\|^2 + \frac{\lambda}{2} \left( \left\| \theta_A \right\|^2 + \left\| \theta_B \right\|^2 \right),$$

where $\theta_A$ represents a parameter of the first local model, $\theta_B$ represents a parameter of the second local model, $x_i^A$ represents an $i^{th}$ piece of first sample data, $x_i^B$ represents an $i^{th}$ piece of second sample data, $y_i$ represents an $i^{th}$ piece of label data, $\theta_A x_i^A$ represents a first processing result corresponding to the $i^{th}$ piece of first sample data, $\theta_B x_i^B$ represents a second processing result corresponding to the $i^{th}$ piece of second sample data, and $\lambda$ represents model accuracy of the first privacy processing initial model.

After the first network device performs first iterative training on the first privacy processing initial model for a plurality of times, when the first training termination condition is met, the first network device may stop training, and determine the first privacy processing initial model obtained through the current training as the target privacy processing model.

During first iterative training at the $i^{th}$ time, the first network device performs first iterative training on the first privacy processing initial model for the $i^{th}$ time based on the first processing result at the $i^{th}$ time that is obtained by using the first local model, the second processing result at the $i^{th}$ time that is obtained by using the second local model, and the first label data. In this way, joint training by the first network device and the second network device is implemented, and the target privacy processing model with high availability and accuracy can be obtained.

In an embodiment of this application, that the first network device performs first iterative training on the first privacy processing initial model for the $i^{th}$ time based on the first processing result at the $i^{th}$ time, the second processing result at the $i^{th}$ time, and first label data may include the following steps.

Step 1: The first network device determines associated data of the first sample data and the second sample data based on identification information of the first sample data and obtained identification information of the second sample data.

Step 2: The first network device performs first iterative training on the first privacy processing initial model for the $i^{th}$ time based on processing results of the associated data in the first processing result at the $i^{th}$ time and the second processing result at the $i^{th}$ time, and the first label data.

For ease of description, the two steps are combined for description.

In this embodiment of this application, the first network device may obtain the identification information of the second sample data of the second network device by exchanging information with the second network device, and then perform sample data alignment processing based on the identification information of the first sample data of the first network device and the obtained identification information of the second sample data, so that the associated data of the first sample data and the second sample data can be determined.

Because both the first sample data of the first network device and the second sample data of the second network device are intended to complete the same service processing task, an association relationship exists between the first sample data and the second sample data. The first network device may maintain a mapping table, where the mapping table may record a mapping relationship of the corresponding identification information of the sample data in the first network device and the second network device, and the first network device determines, based on the mapping relationship, whether the sample data is different intermediate results for a same sample source, that is, associated sample data is screened out based on identification information of the sample data in different domains.

For example, the first sample data of the first network device includes data generated by UE 1, UE 2, UE 3, and UE 4 in a CN, and the second sample data of the second network device includes service experience data of UE 1, UE 3, and UE 5. The first network device may determine, based on identification information of the sample data of both parties, that data generated by UE 1 in the CN, service experience data of UE 1, data generated by UE 3 in the CN, and service experience data of UE 3 are associated data.

The first network device may select the processing results of the associated data from the first processing result at the $i^{th}$ time and the second processing result at the $i^{th}$ time, and perform first iterative training on the first privacy processing initial model for the $i^{th}$ time based on the processing results of the associated data and the first label data.

Based on an association of sample data, sample data in different domains that is shared by the first network device and the second network device may be determined, so that features of different domains are combined to train the first privacy processing initial model and start the training process. When no associated data exists, it may be considered that the first network device and the second network device do not share sample data in different domains, and model training cannot be performed.

In an embodiment of this application, the second processing result at the $i^{th}$ time may be a result obtained by the second network device by encrypting the processing result of the second sample data at the $i^{th}$ time by the trained second local model. In other words, after the second network device processes the second sample data for the $i^{th}$ time by using the trained second local model, the second network device may encrypt the processing result at the $i^{th}$ time to obtain the second processing result at the $i^{th}$ time, and return the second processing result at the $i^{th}$ time to the first network device. This can ensure security of the second processing result. The first network device may use the second processing result after decrypting the second processing result in a decryption mode obtained in advance.

In an embodiment of this application, that the first network device obtains a second processing result at the $i^{th}$ time may include the following steps.

Step 1: The first network device receives first interaction information, where the first interaction information carries a first public key and a first output result, where the first output result is a result obtained after the second network device encrypts the processing result of the second sample data at the $i^{th}$ time by the second local model by using the first public key.

Step 2: After performing a first data processing operation on the first output result and performing randomization processing, the first network device performs encryption by using the first public key, to obtain a second output result.

Step 3: The first network device transmits second interaction information to the second network device, where the second interaction information carries the second output result.

Step 4: The first network device receives third interaction information, where the third interaction information carries a third output result, where the third output result is a result obtained after the second network device decrypts the second output result by using a first private key and performs randomization processing, and the first public key and the first private key are a public-private key pair generated by the second network device.

Step 5: The first network device determines that the third output result is the second processing result at the $i^{th}$ time.

For ease of description, the foregoing steps are combined for description.

When joint training is to be performed, the second network device may generate a public-private key pair, including the first public key and the first private key. During first iterative training at the $i^{th}$ time, after the second network device trains the second local model, the second network device may process the second sample data by using the trained second local model, to obtain the processing result at the $i^{th}$ time, and then encrypt the processing result at the $i^{th}$ time by using the first public key, to obtain the first output result.

The second network device may transmit the first interaction information carrying the first output result and the first public key to the first network device.

After receiving the first interaction information, the first network device may perform the first data processing operation on the first output result carried in the first interaction information. Specifically, the first data processing operation may be performed based on a preset operation configuration. For example, the first output result may be multiplied by a preset initial weight function of a peer device.

After the first data processing operation is performed on the first output result, randomization processing such as adding noise may be further performed, and then encryption is performed by using the first public key, to obtain the second output result.

The first network device may transmit the second interaction information carrying the second output result to the second network device. The second network device may decrypt the second output result by using the first private key, and then perform randomization processing on decrypted information, such as adding noise, to obtain the third output result, and return the third interaction information carrying the third output result to the first network device.

After receiving the third interaction information, the first network device may determine that the third output result carried in the third interaction information is the second processing result at the $i^{th}$ time.

The foregoing information exchange process may be understood as an implementation of homomorphic encryption. The foregoing encryption and forward transmission process may make the first network device unable to know original data of the second network device, thereby ensuring that local data of the second network device is not leaked.

In addition, the first interaction information may further carry identification information of the sample data corresponding to the first output result, so that the first network device can obtain the identification information of the second sample data of the second network device after receiving the first interaction information, and can perform sample data alignment processing based on the identification information of the first sample data and the identification information of the second sample data to determine the associated data of the first sample data and the second sample data. In addition, the first network device may determine, based on the identification information of the sample data carried in the first interaction information, whether the received first output result is complete. The second interaction information transmitted by the first network device to the second network device may carry identification information of the sample data corresponding to the second output result. The second network device may determine, based on the identification information of the sample data carried in the second interaction information, whether the received second output result is complete. Similarly, the third interaction information transmitted by the second network device to the first network device may carry identification information of the sample data corresponding to the third output result. The first network device may determine, based on the identification information of the sample data carried in the third interaction information, whether the received third output result is complete.

In an embodiment of this application, the second intermediate processing result at the $(i-1)^{th}$ time may be a result obtained by the first network device by encrypting the processing result of the second processing result at the $(i-1)^{th}$ time by the first privacy processing initial model.

After performing first iterative training for the $(i-1)^{th}$ time and processing the second processing result at the $(i-1)^{th}$ time by using the trained first privacy processing initial model, the first network device may encrypt the corresponding processing result to obtain the second intermediate processing result at the $(i-1)^{th}$ time, and then transmit the second intermediate processing result at the $(i-1)^{th}$ time to the second network device. This can ensure security of the second intermediate processing result. The second network device may use the second intermediate processing result after decrypting the second intermediate processing result in a decryption mode obtained in advance.

In an embodiment of this application, the second intermediate processing result at the $(i-1)^{th}$ time is transmitted by the first network device to the second network device through the following steps.

Step 1: The first network device performs randomization processing on the result obtained by processing the second processing result at the $(i-1)^{th}$ time by using the first privacy processing initial model, and then performs encryption by using a first public key, to obtain a fourth output result.

Step 2: The first network device transmits fourth interaction information to the second network device, where the fourth interaction information carries the fourth output result.

Step 3: The first network device receives fifth interaction information, where the fifth interaction information carries a fifth output result, where the fifth output result is a result obtained through encryption by using the first public key after the second network device decrypts the fourth output result by using a first private key and performs randomization processing on decrypted information, and the first public key and the first private key are a public-private key pair generated by the second network device.

Step 4: After performing a second data processing operation on the fifth output result, the first network device encrypts the fifth output result by using the first public key, to obtain a sixth output result.

Step 5: The first network device determines that the sixth output result is the second intermediate processing result at the $(i-1)^{th}$ time, and transmits sixth interaction information carrying the second intermediate processing result at the $(i-1)^{th}$ time to the second network device.

For ease of description, the foregoing steps are combined for description.

When i = 2, 3, ..., N, during first iterative training at the $(i-1)^{th}$ time, after the first network device performs first iterative training on the first privacy processing initial model for the $(i-1)^{th}$ time based on the first processing result at the $(i-1)^{th}$ time, the second processing result at the $(i-1)^{th}$ time, and the first label data, the first network device may process the second processing result at the $(i-1)^{th}$ time by using the trained first privacy processing initial model, then perform randomization processing on the corresponding processing result, such as adding noise, and then perform encryption by using the first public key, to obtain the fourth output result.

The first network device may transmit the fourth interaction information carrying the fourth output result to the second network device. The second network device may decrypt the fourth output result by using the first private key, then perform randomization processing on the decrypted information, then perform encryption by using the first public key, to obtain the fifth output result, and return the fifth interaction information carrying the fifth output result to the first network device.

The first network device performs the second data processing operation on the fifth output result. Specifically, the second data processing operation may be performed based on a preset operation configuration. For example, after noise added by a local device is removed from the fifth output result, the fifth output result may be multiplied by a preset learning rate to obtain an estimated weight function of the peer device; and after noise transmitted by the peer device is added to the estimated weight function of the peer device, a sum thereof is substituted into an activation function inferred by the local device to obtain an output result of the inferred activation function. Because real data of the peer device cannot be obtained, there is a difference between the inferred activation function and a real activation function.

Then the fifth output result may be encrypted by using the first public key, to obtain the sixth output result.

The first network device may determine that the sixth output result is the second intermediate processing result at the $(i-1)^{th}$ time, and transmit the sixth interaction information carrying the second intermediate processing result at the $(i-1)^{th}$ time to the second network device.

The foregoing encryption and backward transmission process may make the second network device unable to know original data of the first network device, thereby ensuring that local data of the first network device is not leaked.

Similarly, in the foregoing interaction information, in addition to the corresponding output results, identification information of the sample data corresponding to the output results may also be carried, so that the first network device and the second network device can determine, based on the identification information of the sample data, whether the received output results are complete.

In an embodiment of this application, before the first network device performs, based on the service processing request, first iterative training on the first privacy processing initial model N times, the method may further include the following steps.

Step 1: The first network device determines whether a first joint training condition is met.

Step 2: In a case that it is determined that the first joint training condition is met, the first network device transmits a joint training request message to the second network device, where

in a case that at least one of the following information is determined, the first network device determines that the first joint training condition is met, or else, determines that the first joint training condition is not met:

the service processing request carries joint training indication information, requirement data of the service processing request is private data, and the requirement data of the service processing request has a characteristic of having a same sample but different features.

For ease of description, the foregoing steps are combined for description.

In this embodiment of this application, before the first network device performs, based on the service processing request, first iterative training on the first privacy processing initial model N times, the first network device may determine, based on the service processing request, whether the first joint training condition is met.

The first joint training condition may be set and adjusted based on an actual situation.

In a specific implementation of this embodiment of this application, in a case that at least one of the following information is determined, the first network device determines that the first joint training condition is met, or else, determines that the first joint training condition is not met:

the service processing request carries joint training indication information, requirement data of the service processing request is private data, and the requirement data of the service processing request has a characteristic of having a same sample but different features.

The joint training indication information may include a joint training indication, related model training configuration information, and the like. The private data may be implementation-related data, such as implementation-related data in a terminal or the 3GPP. The requirement data with the same sample but different features may be associated data of the same UE in different domains, such as mobility management (Mobility Management, MM) related data generated by the same UE in the CN, location data generated in a RAN, or service experience data generated by a third-party service.

If the first network device determines that the first joint training condition is met, the first network device may transmit the joint training request message to the second network device to notify the second network device that joint training is required currently. In this way, the first network device and the second network device can start training their local models synchronously, and further, the first network device can train the first privacy processing initial model.

When the first network device determines that the first joint training condition is met, the first network device transmits the joint training request message to the second network device, so that the first network device and the second network device can start joint training synchronously.

In an embodiment of this application, the method may further include the following steps.

Step 1: In a case that it is determined that the first joint training condition is met, the first network device determines model training configuration information.

Step 2: The first network device carries the model training configuration information in the joint training request message, so that joint training is performed with the second network device based on the model training configuration information to obtain the target privacy processing model.

For ease of description, the two steps are combined for description.

In the case that it is determined that the first joint training condition is met, the first network device may determine the model training configuration information. Specifically, the service processing request may carry the privacy processing description reference information, and the first network device may determine the model training configuration information based on the privacy processing description reference information and the preconfiguration information of the first network device. Specific information included in the model training configuration information has been described before, and is not described herein again.

When the first network device transmits the joint training request message to the second network device, the model training configuration information may be carried in the joint training request message, so that the second network device also obtains the model training configuration information and can refer to the model training configuration information to determine model configuration related information of the second network device. In this way, the first network device and the second network device can align model training methods and related parameters based on the model training configuration information, and can perform joint training more efficiently to obtain the target privacy processing model.

In an embodiment of this application, the first sample data may be obtained by the first network device through collection from various sample sources based on sample data type information included in the model training configuration information. The sample sources may be UEs or NFs, for example, the AMF, the SMF, and the UDM. The first network device may transmit a sample data collection request to each sample source based on the sample data type information.

Each sample source collects sample data based on the sample data collection request, such as collecting the number of times that UE 1 goes to a gym from 18:00 to 20:00 every Tuesday and Thursday. After performing processing such as deduplication and denoising, each sample source may report the collected sample data to the first network device.

The second sample data may be obtained by the second network device through data collection based on model training filtering information carried in the joint training request message, such as collecting service experience data of all UEs in cell 1 in a period of 07:00 to 09:00 every Monday.

In an embodiment of this application, after the first network device performs, based on the service processing request, first iterative training on the first privacy processing initial model N times until the specified first training termination condition is met, to obtain the target privacy processing model, the method may further include the following step:

The first network device transmits first model related information of the target privacy processing model to the second network device.

In this embodiment of this application, after the first network device as the coordinator of joint training obtains the target privacy processing model by performing joint training with the second network device, the first network device may transmit the first model related information of the target privacy processing model to the second network device.

The first model related information may include the following information:

related information of the first network device, which may include device identification information, name information, and the like of the first network device;

model validity information of the target privacy processing model, which may include a generation time and effective duration of the target privacy processing model, and is used to indicate an effective time of the target privacy processing model corresponding to the target privacy protection service, where the first network device needs to perform model training again when receiving the same service processing request again beyond the effective time; and

model identification information of the target privacy processing model.

After the first network device as the coordinator of joint training obtains the target privacy processing model by performing joint training with the second network device, the first network device transmits the first model related information of the target privacy processing model to the second network device to share the model related information of the target privacy processing model with the second network device.

The process of obtaining the target privacy processing model by the first network device as the coordinator of joint training by performing joint training with the second network device has been described in detail above. The following describes a process of obtaining the target privacy processing model by the second network device as a coordinator of joint training by performing joint training with the first network device.

In an embodiment of this application, that the first network device obtains, based on the service processing request, a target privacy processing model obtained through joint training with the second network device may include the following steps.

Step 1: The first network device transmits a joint training start indication message to the second network device based on the service processing request.

Step 2: The first network device receives second model related information of the target privacy processing model, where the target privacy processing model is a model obtained by the second network device by performing second iterative training on a second privacy processing initial model for M times based on the joint training start indication message until a specified second training termination condition is met, and M is a positive integer, where

during second iterative training at a $j^{th}$ time, the first network device trains a first local model, and obtains a third processing result at the $j^{th}$ time by processing a processing result of first sample data based on the trained first local model;

the first network device transmits the third processing result at the $j^{th}$ time to the second network device;

second iterative training at the $j^{th}$ time is training performed by the second network device on the second privacy processing initial model based on the third processing result at the $j^{th}$ time, a fourth processing result at the $j^{th}$ time, and second label data, where $j = 1, 2, ..., M$; and

the fourth processing result at the $j^{th}$ time is a result obtained by the second network device by training a second local model and processing second sample data by using the trained second local model.

For ease of description, the foregoing steps are combined for description.

In this embodiment of this application, the second network device may act as the coordinator of joint training, and the second network device takes the lead in joint training with the first network device to obtain the target privacy processing model.

By exchanging information, the first network device and the second network device may share information such as model training configuration information and model training filtering information, so that the first network device and the second network device can perform information alignment during joint training to improve model training efficiency.

The first network device and the second network device may separately collect their sample data based on the determined information. The sample data collected by the first network device is the first sample data, and the sample data collected by the second network device is the second sample data. Both the first sample data and the second sample data may be a plurality of pieces of data. In addition, in this embodiment of this application, processing of sample data or processing results at each stage is performed with a single piece of sample data or a single processing result as a granularity, that is, each piece of sample data or each processing result is processed separately, and a processing result corresponding to each piece of sample data or each processing result is obtained.

Either of the first network device and the second network device may maintain a local model. A local model of the first network device is the first local model, and a local model of the second network device is the second local model. Basic models of the first local model and the second local model may be the same or different. In addition, the second network device may determine the second privacy processing initial model based on the basic model.

After receiving the service processing request of the second network device for the target privacy protection service, the first network device may determine, based on the service processing request, whether joint training is required. If it is determined that joint training is required, the first network device may transmit the joint training start indication message to the second network device to notify the second network device that the first network device is ready for joint training and can start joint training of the model. In this way, the first network device and the second network device can start training their local models synchronously, and further, the second network device can train the second privacy processing initial model.

Specifically, the first network device may determine, based on the service processing request, whether a second joint training condition is met, and in a case that it is determined that the second joint training condition is met, transmit the joint training start indication message to the second network device.

The second joint training condition may be set and adjusted based on an actual situation.

In a specific implementation of this embodiment of this application, in a case that at least one of the following information is determined, the first network device determines that the second joint training condition is met, or else, determines that the second joint training condition is not met:

the service processing request carries joint training indication information, requirement data of the service processing request is private data, and the requirement data of the service processing request has a characteristic of having a same sample but different features.

When the first network device determines that the first joint training condition is met, the first network device transmits the joint training start indication message to the second network device, so that the first network device and the second network device can start joint training synchronously.

As the coordinator of joint training, the second network device may perform, based on the joint training start indication message, second iterative training on the second privacy processing initial model for the M times until the specified second training termination condition is met, to obtain the target privacy processing model. M is not a predetermined value, but the total number of times of second iterative training completed when the second training termination condition is met. M is a positive integer. The second training termination condition may be determined based on the model training configuration information.

During second iterative training at the $j^{th}$ time, the first network device may train the first local model, obtain the third processing result at the $j^{th}$ time by processing the processing result of the first sample data based on the trained first local model, and transmit the third processing result at the $j^{th}$ time to the second network device. In addition, the second network device may train the second local model, obtain the fourth processing result at the $j^{th}$ time by processing the second sample data by using the trained second local model, and transmit the fourth processing result at the $j^{th}$ time to the first network device, where j may be equal to 1, 2, ..., M.

In this way, the second network device obtains the third processing result at the $j^{th}$ time and the fourth processing result at the $j^{th}$ time. The second network device may perform second iterative training on the second privacy processing initial model for the $j^{th}$ time based on the third processing result at the $j^{th}$ time, the fourth processing result at the $j^{th}$ time, and the second label data. The second label data corresponds to an accurate classification result, which may be used as a criterion for adjusting model parameters in the process of model training. The second label data may include data in a public data set and historical data of the second network device.

In other words, in a process of performing second iterative training on the second privacy processing initial model for a first time, the first network device may train the first local model, obtain a third processing result at the first time by processing the processing result of the first sample data based on the trained first local model, and transmit the third processing result at the first time to the second network device; the second network device may train the second local model, and obtain a fourth processing result at the first time by processing the second sample data by using the trained second local model; and the second network device may perform second iterative training on the second privacy processing initial model for the first time based on the third processing result at the first time, the fourth processing result at the first time, and the second label data.

Similarly, in a process of performing second iterative training on the second privacy processing initial model for a second time, the first network device may train the first local model, obtain a third processing result at the second time by processing the processing result of the first sample data based on the trained first local model, and transmit the third processing result at the second time to the second network device; the second network device may train the second local model, and obtain a fourth processing result at the second time by processing the second sample data by using the trained second local model; and the second network device may perform second iterative training on the second privacy processing initial model for the second time based on the third processing result at the second time, the fourth processing result at the second time, and the second label data.

The iterative training proceeds sequentially and is not described in detail again.

The second network device performs, based on the joint training start indication message, second iterative training on the second privacy processing initial model for a plurality of times jointly with the first network device, so that the target privacy processing model can be quickly obtained.

After the second network device obtains the target privacy processing model, the second network device may transmit second model related information of the target privacy processing model to the first network device, so that the first network device obtains the second model related information of the target privacy processing model and can perform privacy processing on corresponding data by using the target privacy processing model.

The second model related information may include the following information:

related information of the second network device, which may include device identification information, name information, and the like of the second network device;

model validity information of the target privacy processing model, which may include a generation time and effective duration of the target privacy processing model, and is used to indicate an effective time of the target privacy processing model corresponding to the target privacy protection service, where model training needs to be performed again when the same service processing request is received again beyond the effective time; and

model identification information of the target privacy processing model.

After the second network device as the coordinator of joint training obtains the target privacy processing model by performing joint training with the first network device, the second network device transmits the second model related information of the target privacy processing model to the first network device to share the model related information of the target privacy processing model with the first network device.

In an embodiment of this application, when $j = 1$, the third processing result at the $j^{th}$ time is a result obtained by the first network device by training the first local model by using the first sample data and processing the processing result of the first sample data based on the trained first local model; and

the fourth processing result at the $j^{th}$ time is a result obtained by the second network device by training the second local model by using the second sample data and processing the second sample data by using the trained second local model.

In this embodiment of this application, at the beginning of joint training, that is, during second iterative training at the first time, the first network device may first train the first local model by using the first sample data, to obtain the trained first local model, and may further process the processing result of the first sample data based on the trained first local model to obtain the third processing result at the first time. Each piece of first sample data corresponds to a third processing result thereof at the first time.

Similarly, at the beginning of joint training, that is, during second iterative training at the first time, the second network device may first train the second local model by using the second sample data, to obtain the trained second local model, and may further obtain the fourth processing result at the first time by processing the second sample data by using the trained second local model. Each piece of second sample data corresponds to a fourth processing result thereof at the first time.

The first network device may transmit the third processing result at the first time to the second network device. In this way, the second network device obtains the third processing result at the first time and the fourth processing result at the first time, and may perform second iterative training on the second privacy processing initial model for the first time based on the third processing result at the first time, the fourth processing result at the first time, and the second label data.

At the beginning of joint training, the first network device and the second device train their local models by using their sample data, so that the corresponding processing results can be quickly obtained; and then the second network device trains the second privacy processing initial model to facilitate smooth joint training.

In an embodiment of this application, when $j = 2, 3, ..., M$, the third processing result at the $j^{th}$ time is a result obtained by the first network device by training the first local model by using a third intermediate processing result at a $(j-1)^{th}$

time and processing the processing result of the first sample data based on the trained first local model;

the fourth processing result at the jth time is a result obtained by the second network device by training the second local model by using a fourth intermediate processing result at the (j-1)th time and processing the second sample data by using the trained second local model;
the third intermediate processing result at the (j-1)th time is a result obtained by the second network device by processing a processing result of a third processing result at the (j-1)th time based on the trained second privacy processing initial model after second iterative training is performed for the (j-1)th time; and
the fourth intermediate processing result at the (j-1)th time is a result obtained by the second network device by processing a fourth processing result at the (j-1)th time by using the trained second privacy processing initial model after second iterative training is performed for the (j-1)th time.

In this embodiment of this application, as the coordinator of joint training, the second network device trains the second privacy processing initial model jointly with the first network device.

When j = 2, 3, ..., N, after the second network device performs second iterative training on the second privacy processing initial model for the (j-1)th time based on the third processing result at the (j-1)th time, the fourth processing result at the (j-1)th time, and the second label data, the second network device may obtain the third intermediate processing result at the (j-1)th time by processing the third processing result at the (j-1)th time based on the trained second privacy processing initial model, and transmit the third intermediate processing result at the (j-1)th time to the first network device. Specifically, the third intermediate processing result may correspond to a gradient of a loss function of the second privacy processing initial model with respect to parameters of the first local model.

In addition, the second network device may obtain the fourth intermediate processing result at the (j-1)th time by processing the fourth processing result at the (j-1)th time by using the trained second privacy processing initial model. Specifically, the fourth intermediate processing result may correspond to a gradient of the loss function of the second privacy processing initial model with respect to parameters of the second local model.

The first network device may train the first local model by using the third intermediate processing result at the (j-1)th time, where the first local model is the first local model trained last time, and then the first local model is updated and trained this time by using the third intermediate processing result at the (j-1)th time. The first sample data may be processed by using the trained first local model, and the third processing result at the jth time may be obtained based on the corresponding processing result and transmitted to the second network device.

Similarly, the second network device may train the second local model by using the fourth intermediate processing result at the (j-1)th time, where the second local model is the second local model trained last time, and then the second local model is updated and trained this time by using the fourth intermediate processing result at the (j-1)th time. The fourth processing result at the jth time may be obtained by processing the second sample data by using the trained second local model.

Further, the second network device may perform second iterative training on the second privacy processing initial model for the jth time based on the third processing result at the jth time, the fourth processing result at the jth time, and the second label data.

The second network device and the first network device separately train their local models by using the intermediate processing results obtained based on the trained second privacy processing initial model, and then the second privacy processing initial model is trained based on the processing results of the trained local models and the second label data. This process is performed cyclically, so that the second training termination condition can be quickly met and that the target privacy processing model can be obtained.

When j = 1, 2, ..., M, the second network device performs second iterative training on the second privacy processing initial model for the jth time based on the third processing result at the jth time, the fourth processing result at the jth time, and the second label data. Specifically, the second network device may separately input the third processing result at the jth time and the fourth processing result at the jth time into the second privacy processing initial model, obtain an output of the second privacy processing initial model after processing of the second privacy processing initial model, compare the output of the second privacy processing initial model with the second label data, and adjust parameters of the second privacy processing initial model based on a comparison result, so that the loss function of the second privacy processing initial model can be continuously converged. For the loss function of the second privacy processing initial model, refer to the specific expression of the loss function of the first privacy processing initial model. Details are not described again.

After the second network device performs second iterative training on the second privacy processing initial model for a plurality of times, when the second training termination condition is met, the second network device may stop training, and determine the second privacy processing initial model obtained through the current training as the target privacy processing model.

During second iterative training at the jth time, the second network device performs second iterative training on the second privacy processing initial model for the $j^{th}$ time based on the third processing result at the $j^{th}$ time that is obtained by using the first local model, the fourth processing result at the $j^{th}$ time that is obtained by using the second local model, and the second label data. In this way, joint training by the second network device and the first network device is implemented, and the target privacy processing model with high availability and accuracy can be obtained.

In an embodiment of this application, that the second network device performs second iterative training on the second privacy processing initial model for the $j^{th}$ time based on the third processing result at the $j^{th}$ time, the fourth processing result at the $j^{th}$ time, and the second label data may be specifically as follows: The second network device first determines associated data of the first sample data and the second sample data based on obtained identification information of the first sample data and identification information of the second sample data, and then performs second iterative training on the second privacy processing initial model for the $j^{th}$ time based on processing results of the associated data in the third processing result at the $j^{th}$ time and the fourth processing result at the $j^{th}$ time, and the second label data.

Based on an association of sample data, sample data in different domains that is shared by the first network device and the second network device may be determined, so that features of different domains are combined to train the first privacy processing initial model and start the training process.

In an embodiment of this application, the third processing result at the $j^{th}$ time may be a result obtained by the first network device by encrypting the processing result of the first sample data at the $j^{th}$ time by the trained first local model. In other words, after the first network device processes the first sample data for the $j^{th}$ time by using the trained first local model, the first network device may encrypt the processing result at the $j^{th}$ time to obtain the third processing result at the $j^{th}$ time, and transmit the third processing result at the $j^{th}$ time to the second network device. This can ensure security of the third processing result. The second network device may use the third processing result after decrypting the third processing result in a decryption mode obtained in advance.

In an embodiment of this application, that the first network device transmits the third processing result at the $j^{th}$ time to the second network device may include the following steps.

Step 1: After obtaining the processing result of the first sample data at the $j^{th}$ time by using the first local model, the first network device performs encryption by using a second public key, to obtain a seventh output result.

Step 2: The first network device transmits seventh interaction information to the second network device, where the seventh interaction information carries the seventh output result and the second public key.

Step 3: The first network device receives eighth interaction information, where the eighth interaction information carries an eighth output result, and the eighth output result is a result obtained through encryption by using the second public key after the second network device performs a third data processing operation on the seventh output result and performs randomization processing.

Step 4: After decrypting the eighth output result by using a second private key and performing randomization processing on decrypted information, the first network device obtains a ninth output result, where the second public key and the second private key are a public-private key pair generated by the first network device.

Step 5: The first network device determines that the ninth output result is the third processing result at the $j^{th}$ time, and transmits ninth interaction information carrying the third processing result at the $j^{th}$ time to the second network device.

For ease of description, the foregoing steps are combined for description.

When joint training is to be performed, the first network device may generate a public-private key pair, including the second public key and the second private key. During second iterative training at the $j^{th}$ time, after the first network device trains the first local model, the first network device may process the first sample data by using the trained first local model, to obtain the processing result at the $j^{th}$ time, and then encrypt the processing result at the $j^{th}$ time by using the second public key, to obtain the seventh output result.

The first network device may transmit the seventh interaction information carrying the seventh output result and the second public key to the second network device.

After receiving the seventh interaction information, the second network device may perform the third data processing operation on the seventh output result carried in the seventh interaction information. Specifically, the third data processing operation may be performed based on a preset operation configuration. Refer to the process of the first data processing operation.

After the third data processing operation is performed on the seventh output result, randomization processing such as adding noise may be further performed, then encryption is performed by using the second public key, to obtain the eighth output result, and the eighth interaction information carrying the eighth output result is returned to the first network device.

The first network device may decrypt the eighth output result by using the second private key, and then perform randomization processing on the decrypted information, such as adding noise, to obtain the ninth output result.

The first network device may determine that the ninth output result is the third processing result at the $j^{th}$ time, and transmit the ninth interaction information carrying the third processing result at the $j^{th}$ time to the second network device.

The foregoing information exchange process may be understood as an implementation of homomorphic encryption. The foregoing encryption and forward transmission process may make the second network device unable to know original data of the first network device, thereby ensuring that local data of the first network device is not leaked.

In addition, the seventh interaction information may further carry identification information of the sample data corresponding to the seventh output result, so that the second network device can obtain the identification information of the first sample data of the first network device after receiving the seventh interaction information, and can perform sample data alignment processing based on the identification information of the first sample data and the identification information of the second sample data to determine the associated data of the first sample data and the second sample data. In addition, the second network device may determine, based on the identification information of the sample data carried in the seventh interaction information, whether the received seventh output result is complete. The eighth interaction information transmitted by the second network device to the first network device may carry identification information of the sample data corresponding to the eighth output result. The first network device may determine, based on the identification information of the sample data carried in the eighth interaction information, whether the received eighth output result is complete. Similarly, the ninth interaction information transmitted by the first network device to the second network device may carry identification information of the sample data corresponding to the third processing result. The second network device may determine, based on the identification information of the sample data carried in the ninth interaction information, whether the received third processing result is complete.

In an embodiment of this application, the third intermediate processing result at the $(j-1)^{th}$ time may be a result obtained by the second network device by encrypting the processing result of the third processing result at the $(j-1)^{th}$ time by the second privacy processing initial model.

In this embodiment of this application, after performing second iterative training for the $(j-1)^{th}$ time, and processing the third processing result at the $(j-1)^{th}$ time by using the trained second privacy processing initial model, the second network device may encrypt the corresponding processing result to obtain the third intermediate processing result at the $(j-1)^{th}$ time, and then transmit the third intermediate processing result at the $(j-1)^{th}$ time to the first network device. This can ensure security of the third intermediate processing result. The first network device may use the third intermediate processing result after decrypting the third intermediate processing result in a decryption mode obtained in advance.

In an embodiment of this application, the third intermediate processing result at the $(j-1)^{th}$ time may be obtained by the first network device through the following steps.

Step 1: The first network device receives tenth interaction information, where the tenth interaction information carries a tenth output result, and the tenth output result is a result obtained through encryption by using a second public key after the second network device processes the third processing result at the $(j-1)^{th}$ time by using the second privacy processing initial model and performs randomization processing.

Step 2: After decrypting the tenth output result by using a second private key and performing randomization processing on decrypted information, the first network device performs encryption by using the second public key, to obtain an eleventh output result, where the second public key and the second private key are a public-private key pair generated by the first network device.

Step 3: The first network device transmits eleventh interaction information to the second network device, where the eleventh interaction information carries the eleventh output result.

Step 4: The first network device receives twelfth interaction information, where the twelfth interaction information carries a twelfth output result, and the twelfth output result is a result obtained after the second network device performs a fourth data processing operation on the eleventh output result and performs encryption by using the second public key.

Step 5: The first network device determines that the twelfth output result is the third intermediate processing result at the $(j-1)^{th}$ time.

For ease of description, the foregoing steps are combined for description.

When j = 2, 3, ..., N, during first iterative training at the $(j-1)^{th}$ time, after the second network device performs second iterative training on the second privacy processing initial model for the $(j-1)^{th}$ time based on the third processing result at the $(j-1)^{th}$ time, the fourth processing result at the $(j-1)^{th}$ time, and the second label data, the second network device may process the third processing result at the $(j-1)^{th}$ time by using the trained second privacy processing initial model, then perform randomization processing on the corresponding processing result, such as adding noise, then perform encryption by using the second public key, to obtain the tenth output result, and transmit the tenth interaction information carrying the tenth output result to the first network device.

The first network device may decrypt the tenth output result by using the second private key, then perform randomization processing on the decrypted information, then perform encryption by using the second public key, to obtain the eleventh output result, and transmit the eleventh interaction information carrying the eleventh output result to the second network device.

The second network device performs the fourth data processing operation on the eleventh output result. Specifically, the fourth data processing operation may be performed based on a preset operation configuration. Refer to the process of the second data processing operation.

Then encryption may be performed by using the second public key, to obtain the twelfth output result, and the twelfth interaction information carrying the twelfth output result is returned to the first network device.

The first network device may determine that the twelfth output result is the third intermediate processing result at the (j-1)$^{th}$ time.

The foregoing encryption and backward transmission process may make the first network device unable to know original data of the second network device, thereby ensuring that local data of the second network device is not leaked.

Similarly, in the foregoing interaction information, in addition to the corresponding output results, identification information of the sample data corresponding to the output results may also be carried, so that the first network device and the second network device can determine, based on the identification information of the sample data, whether the received output results are complete.

In an embodiment of this application, that the first network device obtains, based on the service processing request, a target privacy processing model obtained through joint training with the second network device may include the following steps.

Step 1: The first network device determines, based on the service processing request, whether a historical privacy processing model corresponding to the target privacy protection service exists, where the historical privacy processing model is obtained through joint training with the second network device.

Step 2: In a case that it is determined that the historical privacy processing model exists, the first network device determines that the historical privacy processing model is the target privacy processing model.

For ease of description, the two steps are combined for description.

After receiving the service processing request transmitted by the second network device, the first network device may determine, based on the service processing request, whether the historical privacy processing model corresponding to the target privacy protection service exists. The historical privacy processing model may be obtained through joint training with the second network device in presence of the same service processing request previously. If the historical privacy processing model exists, it may be determined that the historical privacy processing model is the target privacy processing model, and the historical privacy processing model may be directly used for data privacy processing, so that data processing efficiency is improved.

In an embodiment of this application, that the first network device determines that the historical privacy processing model is the target privacy processing model in a case that it is determined that the historical privacy processing model exists may include the following steps.

Step 1: In the case that it is determined that the historical privacy processing model exists, the first network device determines whether the historical privacy processing model is in a valid state.

Step 2: In a case that it is determined that the historical privacy processing model is in the valid state, the first network device determines that the historical privacy processing model is the target privacy processing model.

For ease of description, the two steps are combined for description.

It may be understood that the privacy processing model obtained through joint training by the first network device and the second network device may have certain validity and can be used normally only within an effective time range.

After determining that the historical privacy processing model corresponding to the target privacy protection service exists, the first network device may further determine whether the historical privacy processing model is in the valid state, and if the historical privacy processing model is in the valid state, determine that the historical privacy processing model is the target privacy processing model. Otherwise, joint training may be performed again with the second network device to obtain the target privacy processing model.

Determining whether the historical privacy processing model is in the valid state can ensure validity of the determined target privacy processing model and further ensure validity of data privacy processing.

In an embodiment of this application, the first network device and the second network device exchange information through an information exposure device, and the service processing request received by the first network device is a request transmitted to the first network device in a case that the information exposure device determines, by querying privacy protection service subscription information of the second network device, that the target privacy protection service is authorized after the information exposure device receives the service processing request transmitted by the second network device.

In this embodiment of this application, data provided by the communication network for an external application may be provided through the information exposure device. For example, in the 3GPP network, information is exchanged with an external application through a NEF.

The NEF is a network element in the 3GPP. Through a specific interface, the NEF exchanges information with an external application authorized by the 3GPP. Specific capabilities of the communication network that can be exposed to the external application include:

   a monitoring capability, used to monitor specific events of UE in the communication network system, and externally expose information about the monitored events through the NEF, where the monitored events mainly include a location, reachability, a roaming state, a connected state, and the like of the UE; and

a security reporting capability: including identity authentication, authorization control, network defense, and other services; alternatively, the external application configures and adjusts network security capabilities by managing authorized slices.

Both the first network device and the second network device exchange information through the information exposure device.

The service processing request transmitted by the second network device to the first network device first reaches the information exposure device. After receiving the service processing request transmitted by the second network device, the information exposure device queries the privacy protection service subscription information of the second network device, and may determine, based on the privacy protection service subscription information of the second network device, whether the target privacy protection service is authorized. If it is determined that the target privacy protection service is authorized, the information exposure device transmits the service processing request to the first network device, and the first network device continues to perform operations of subsequent steps based on the service processing request.

If it is determined that the target privacy protection service is not authorized, the information exposure device may stop continuation of the target privacy protection service to ensure legality of the privacy protection service.

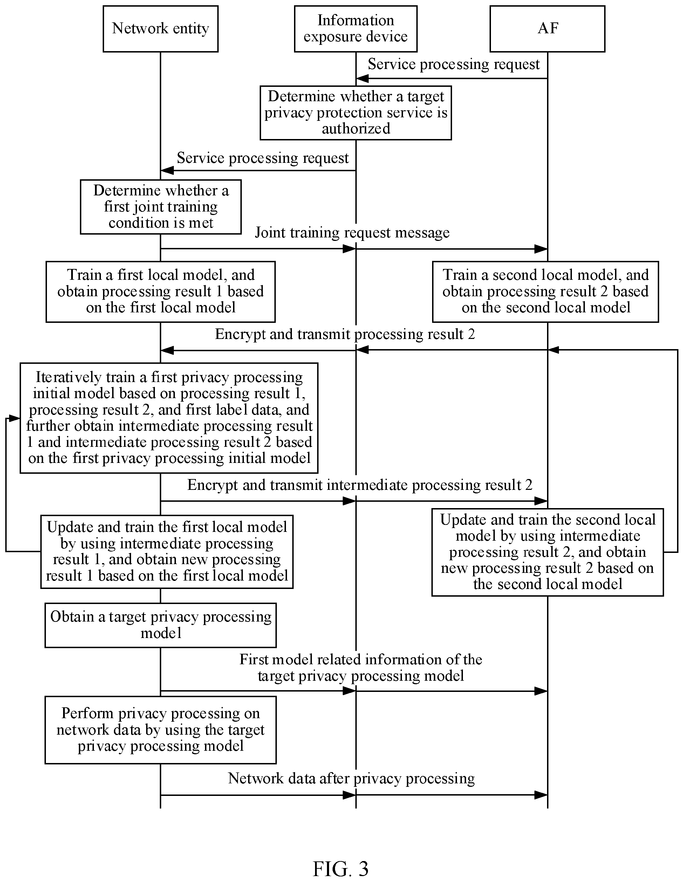

To facilitate understanding, embodiments of this application are described again by using service processing procedures shown in FIG. 3 to FIG. 8 as examples.

In a service processing procedure shown in FIG. 3, a first network device, as a coordinator of joint training, may be an existing network element of a communication network or a new network element. In this embodiment, the first network device is referred to as a network entity. A second network device corresponds to an external application, which may be an AF. The AF and the network entity exchange information through an information exposure device. A specific process is as follows:

The AF transmits a service processing request to the network entity, where the service processing request first reaches the information exposure device, and the service processing request may carry device identification information of the AF, service identification information of a target privacy protection service, privacy processing description reference information, and the like.

The information exposure device determines, by querying privacy protection service subscription information of the AF, whether the target privacy protection service is authorized, and transparently transmits the service processing request to the network entity if the target privacy protection service is authorized, or rejects the service processing request if the target privacy protection service is not authorized.

The network entity determines, based on the service processing request, whether a first joint training condition is met, and if the first joint training condition is met, transmits a joint training request message to the AF, where the joint training request message may carry joint training indication information, model training configuration information, model training filtering information, and the like.

The network entity trains a first local model by using first sample data, and obtains processing result 1 of the first sample data by using the trained first local model.

In addition, the AF trains a second local model by using second sample data, and obtains processing result 2 of the second sample data by using the trained second local model.

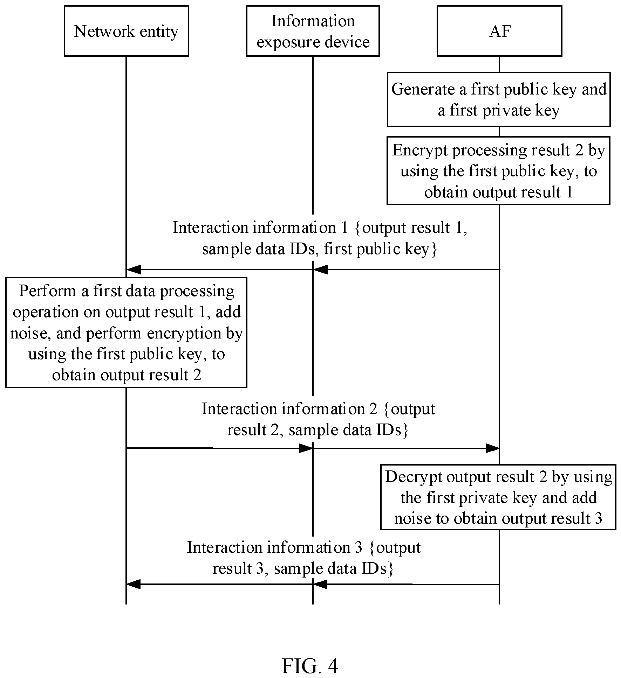

The AF encrypts and transmits processing result 2. A specific process is shown in FIG. 4.

(1) The AF generates a first public key and a first private key.

(2) The AF encrypts processing result 2 by using the first public key, to obtain output result 1.

(3) The AF transmits interaction information 1 to the network entity, where interaction information 1 may carry output result 1, a sample data ID corresponding to output result 1, and the first public key.

(4) The network entity performs a first data processing operation on output result 1, adds noise, and performs encryption by using the first public key, to obtain output result 2.

(5) The network entity transmits interaction information 2 to the AF, where interaction information 2 may carry output result 2 and a sample data ID corresponding to output result 2.

(6) The AF decrypts output result 2 by using the first private key and adds noise to obtain output result 3.

(7) The AF transmits interaction information 3 to the network entity, where interaction information 3 may carry output result 3 and a sample data ID corresponding to output result 3.

The network entity iteratively trains a first privacy processing initial model based on processing result 1, processing result 2 (or output result 3), and first label data, and further processes processing result 1 and processing result 2 based on the trained first privacy processing initial model to obtain intermediate processing result 1 and intermediate processing result 2.

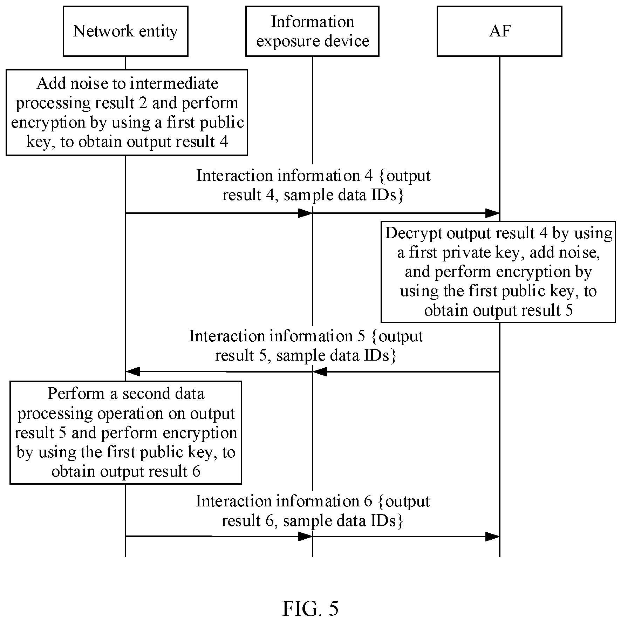

The network entity encrypts and transmits intermediate processing result 2. A specific process is shown in FIG. 5.

(1) The network entity adds noise to intermediate processing result 2 and performs encryption by using the first public key, to obtain output result 4.

(2) The network entity transmits interaction information 4 to the AF, where interaction information 4 may carry output result 4 and a sample data ID corresponding to output result 4.

(3) The AF decrypts output result 4 by using the first private key, adds noise, and performs encryption by using the first public key, to obtain output result 5.

(4) The AF transmits interaction information 5 to the network entity, where interaction information 5 may carry output result 5 and a sample data ID corresponding to output result 5.

(5) The network entity performs a second data processing operation on output result 5 and performs encryption by using the first public key, to obtain output result 6.

(6) The network entity transmits interaction information 6 to the AF, where interaction information 6 may carry output result 6 and a sample data ID corresponding to output result 6.

The network entity updates and trains the first local model by using intermediate processing result 1, and obtains new processing result 1 of the first sample data by using the trained first local model.

In addition, the AF updates and trains the second local model by using intermediate processing result 2 (or output result 6), obtains new processing result 2 of the second sample data by using the trained second local model, and repeats the process of encrypting and transmitting processing result 2.

The network entity iteratively trains the first privacy processing initial model based on new processing result 1, new processing result 2, and the first label data until a first training termination condition is met, to obtain a target privacy processing model.

The network entity transmits first model related information of the target privacy processing model to the AF.

The network entity performs, by using the target privacy processing model, privacy processing on network data related to the target privacy protection service, and then transmits the network data to the AF, where the network data after privacy processing is a service processing result.

All the information transmission between the network entity and the AF is performed through the information exposure device.

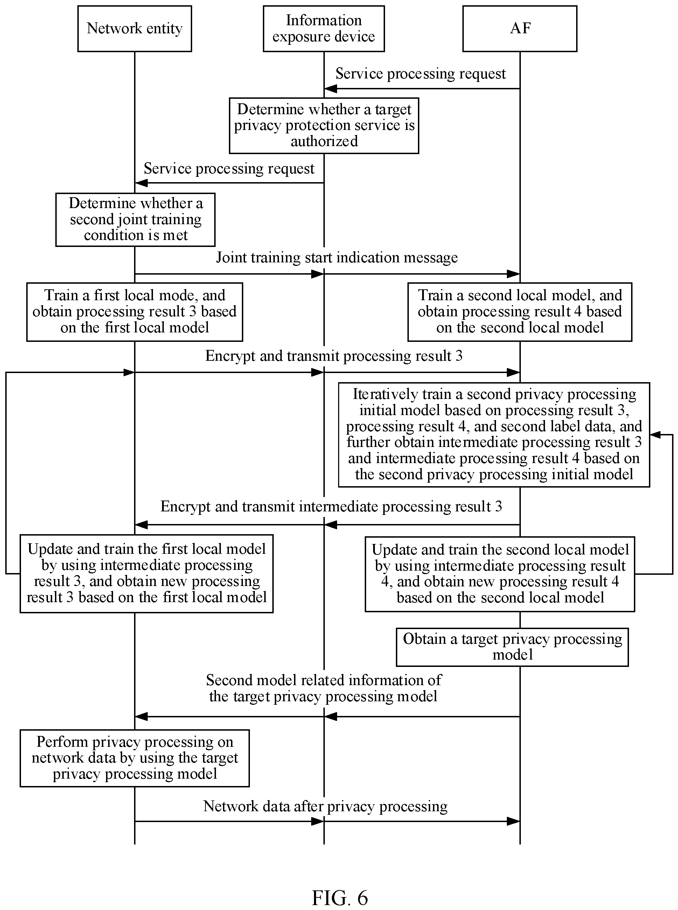

In a service processing procedure shown in FIG. 6, a second network device, as a coordinator of joint training, corresponds to an external application, which may be an AF. A first network device may be an existing network element of a communication network or a new network element. In this embodiment, the first network device is referred to as a network entity. The AF and the network entity exchange information through an information exposure device. A specific process is as follows:

The AF transmits a service processing request to the network entity, where the service processing request first reaches the information exposure device, and the service processing request may carry device identification information of the AF, service identification information of a target privacy protection service, privacy processing description reference information, and the like.

The information exposure device determines, by querying privacy protection service subscription information of the AF, whether the target privacy protection service is authorized, and transparently transmits the service processing request to the network entity if the target privacy protection service is authorized, or rejects the service processing request if the target privacy protection service is not authorized.

The network entity determines, based on the service processing request, whether a second joint training condition is met, and if the second joint training condition is met, transmits a joint training start indication message to the AF.

The network entity trains a first local model by using first sample data, and obtains processing result 3 of the first sample data by using the trained first local model.

In addition, the AF trains a second local model by using second sample data, and obtains processing result 4 of the second sample data by using the trained second local model.

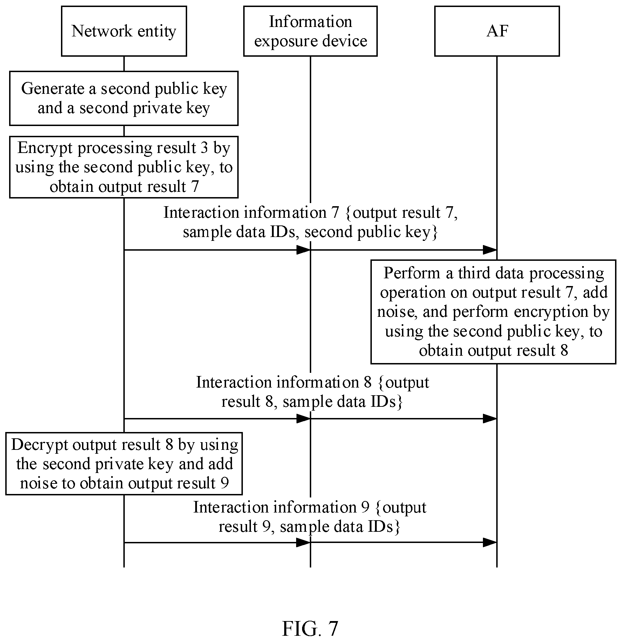

The network entity encrypts and transmits processing result 3. A specific process is shown in FIG. 7.

(1) The network entity generates a second public key and a second private key.

(2) The network entity encrypts processing result 3 by using the second public key, to obtain output result 7.

(3) The network entity transmits interaction information 7 to the AF, where interaction information 7 may carry output result 7, a sample data ID corresponding to output result 7, and the second public key.

(4) The AF performs a third data processing operation on output result 7, adds noise, and performs encryption by using the second public key, to obtain output result 8.

(5) The AF transmits interaction information 8 to the network entity, where interaction information 8 may carry output result 8 and a sample data ID corresponding to output result 8.

(6) The network entity decrypts output result 8 by using the second private key and adds noise to obtain output result 9.

(7) The network entity transmits interaction information 9 to the AF, where interaction information 9 may carry output result 9 and a sample data ID corresponding to output result 9.

The AF iteratively trains a second privacy processing initial model based on processing result 3 (or output result 9), processing result 4, and second label data, and further processes processing result 3 and processing result 4 based on the trained second privacy processing initial model to obtain intermediate processing result 3 and intermediate processing result 4.

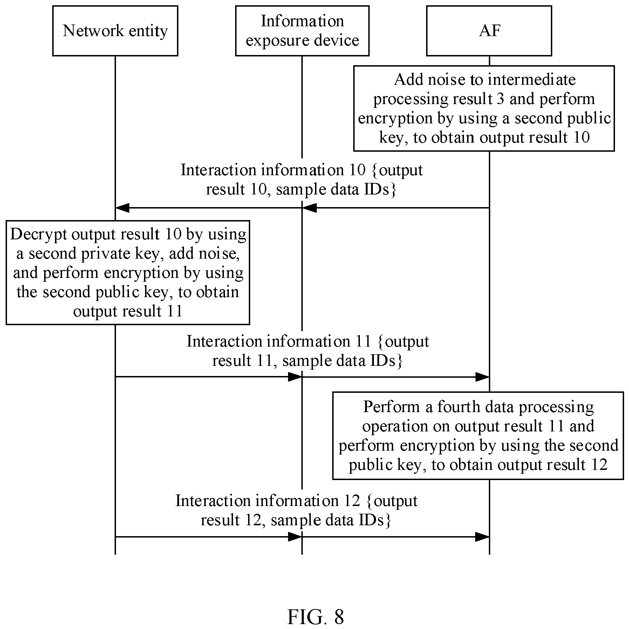

The AF encrypts and transmits intermediate processing result 3. A specific process is shown in FIG. 8.

(1) The AF adds noise to intermediate processing result 3 and performs encryption by using the second public key, to obtain output result 10.

(2) The AF transmits interaction information 10 to the network entity, where interaction information 10 may carry output result 10 and a sample data ID corresponding to output result 10.

(3) The network entity decrypts output result 10 by using the second private key, adds noise, and performs encryption by using the second public key, to obtain output result 11.

(4) The network entity transmits interaction information 11 to the AF, where interaction information 11 may carry output result 11 and a sample data ID corresponding to output result 11.

(5) The AF performs a fourth data processing operation on output result 11 and performs encryption by using the second public key, to obtain output result 12.

(6) The AF transmits interaction information 12 to the network entity, where interaction information 12 may carry output result 12 and a sample data ID corresponding to output result 12.

The network entity updates and trains the first local model by using intermediate processing result 3 (or output result 12), obtains new processing result 3 of the first sample data by using the trained first local model, and repeats the process of encrypting and transmitting processing result 3.

In addition, the AF updates and trains the second local model by using intermediate processing result 4, and obtains new processing result 4 of the second sample data by using the trained second local model.

The AF iteratively trains the second privacy processing initial model based on new processing result 3, new processing result 4, and the second label data until a second training termination condition is met, to obtain a target privacy processing model.

The AF transmits second model related information of the target privacy processing model to the network entity.

The network entity performs, by using the target privacy processing model, privacy processing on network data related to the target privacy protection service, and then transmits the network data to the AF, where the network data after privacy processing is a service processing result.

All the information transmission between the network entity and the AF is performed through the information exposure device.

The foregoing information interaction may enable the first network device and the second network device to obtain the target privacy processing model through joint training, so that privacy processing can be performed on the network data related to the target privacy protection service by using the target privacy processing model and that data provided for external applications is privacy-processed data. This can better protect privacy of internal data of the network and increase an amount of data that the communication network can provide for external applications for use. Therefore, plenty of internal data of the communication network can be effectively used and data utilization can be improved.

The service processing method provided in the embodiment of this application shown in FIG. 2 may be performed by a service processing apparatus. A service processing apparatus provided in an embodiment of this application is described by assuming that the service processing method is performed by the service processing apparatus in this embodiment of this application.

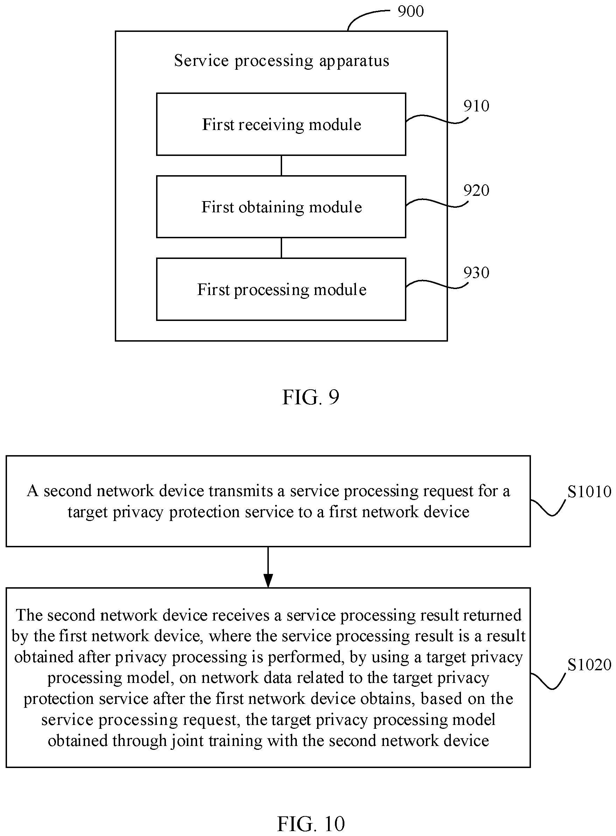

As shown in FIG. 9, a service processing apparatus 900 may include the following modules:

a first receiving module 910, configured to receive a service processing request of a second network device for a target privacy protection service;

a first obtaining module 920, configured to obtain, based on the service processing request, a target privacy processing model obtained through joint training with the second network device; and

a first processing module 930, configured to perform, by using the target privacy processing model, privacy processing on network data related to the target privacy protection service, and then transmit the network data to the second network device.

After receiving the service processing request of the second network device for the target privacy protection service, the apparatus provided in this embodiment of this application obtains, based on the service processing request, the target privacy processing model obtained through joint training with the second network device, then performs, by using the target privacy processing model, privacy processing on the network data related to the target privacy protection service, and then transmits the network data to the second network device. In other words, privacy processing is first performed, by using the target privacy processing model obtained through joint training with the second network device, on the network data related to the target privacy protection service requested by the second network device, and then the network data is provided for the second network device. This can better protect privacy of internal data of the network and increase an amount of data that a communication network can provide for external applications for use. Therefore, plenty of internal data of the communication network can be effectively used and data utilization can be improved.

In a specific implementation of this application, the first obtaining module 920 is configured to:

perform, based on the service processing request, first iterative training on a first privacy processing initial model N times until a specified first training termination condition is met, to obtain the target privacy processing model, where N is a positive integer;

during first iterative training at an $i^{th}$ time, train a first local model, and obtain a first processing result of first sample data at the $i^{th}$ time by using the trained first local model, where i = 1, 2, ..., N;

obtain a second processing result at the $i^{th}$ time, where the second processing result at the $i^{th}$ time is a result obtained by the second network device by training a second local model and processing a processing result of second sample data based on the trained second local model; and

perform first iterative training on the first privacy processing initial model for the $i^{th}$ time based on the first processing result at the $i^{th}$ time, the second processing result at the $i^{th}$ time, and first label data.

In a specific implementation of this application, when i = 1, the first processing result at the $i^{th}$ time is a result obtained by the first obtaining module 920 by training the first local model by using the first sample data and processing the first sample data by using the trained first local model; and

the second processing result at the $i^{th}$ time is a result obtained by the second network device by training the second local model by using the second sample data and processing the processing result of the second sample data based on the trained second local model.

In a specific implementation of this application, when i = 2, 3, ..., N, the first processing result at the $i^{th}$ time is a result obtained by the first obtaining module 920 by training the first local model by using a first intermediate processing result at an $(i-1)^{th}$ time and processing the first sample data by using the trained first local model;

the second processing result at the $i^{th}$ time is a result obtained by the second network device by training the second local model by using a second intermediate processing result at the $(i-1)^{th}$ time and processing the processing result of the second sample data based on the trained second local model;

the first intermediate processing result at the $(i-1)^{th}$ time is a result obtained by the first obtaining module 920 by processing a first processing result at the $(i-1)^{th}$ time by using the trained first privacy processing initial model after first iterative training is performed for the $(i-1)^{th}$ time; and

the second intermediate processing result at the $(i-1)^{th}$ time is a result obtained by a first network device by processing a processing result of a second processing result at the $(i-1)^{th}$ time based on the trained first privacy processing initial model after first iterative training is performed for the $(i-1)^{th}$ time.

In a specific implementation of this application, the first obtaining module 920 is configured to:

determine associated data of the first sample data and the second sample data based on identification information of the first sample data and obtained identification information of the second sample data; and

perform first iterative training on the first privacy processing initial model for the $i^{th}$ time based on processing results of the associated data in the first processing result at the $i^{th}$ time and the second processing result at the $i^{th}$ time, and the first label data.

In a specific implementation of this application, the first obtaining module 920 is configured to:

receive first interaction information, where the first interaction information carries a first public key and a first output result, where the first output result is a result obtained after the second network device encrypts the processing result of the second sample data at the $i^{th}$ time by the second local model by using the first public key;

after performing a first data processing operation on the first output result and performing randomization processing, perform encryption by using the first public key, to obtain a second output result;

transmit second interaction information to the second network device, where the second interaction information carries the second output result;

receive third interaction information, where the third interaction information carries a third output result, where the third output result is a result obtained after the second network device decrypts the second output result by using a first private key and performs randomization processing, and the first public key and the first private key are a public-private key pair generated by the second network device; and

determine that the third output result is the second processing result at the $i^{th}$ time.

In a specific implementation of this application, the first obtaining module 920 is configured to transmit the second intermediate processing result at the $(i-1)^{th}$ time to the second network device through the following steps:

performing randomization processing on the result obtained by processing the second processing result at the $(i-1)^{th}$ time by using the first privacy processing initial model, and then performing encryption by using a first public key, to obtain a fourth output result;

transmitting fourth interaction information to the second network device, where the fourth interaction information carries the fourth output result;

receiving fifth interaction information, where the fifth interaction information carries a fifth output result, where the fifth output result is a result obtained through encryption by using the first public key after the second network device decrypts the fourth output result by using a first private key and performs randomization processing on decrypted information, and the first public key and the first private key are a public-private key pair generated by the second network device;

after performing a second data processing operation on the fifth output result, performing encryption by using the first public key, to obtain a sixth output result; and

determining that the sixth output result is the second intermediate processing result at the $(i-1)^{th}$ time, and transmitting sixth interaction information carrying the second intermediate processing result at the $(i-1)^{th}$ time to the second network device.

In a specific implementation of this application, the service processing apparatus 900 further includes a first transmitting module, configured to:

before the first obtaining module 920 performs, based on the service processing request, first iterative training on the first privacy processing initial model N times, determine whether a first joint training condition is met; and

in a case that it is determined that the first joint training condition is met, transmit a joint training request message to the second network device, where

in a case that at least one of the following information is determined, the first transmitting module determines that the first joint training condition is met, or else, determines that the first joint training condition is not met:

the service processing request carries joint training indication information, requirement data of the service processing request is private data, and the requirement data of the service processing request has a characteristic of having a same sample but different features.

In a specific implementation of this application, the first transmitting module is further configured to:

in a case that it is determined that the first joint training condition is met, determine model training configuration information; and

carry the model training configuration information in the joint training request message, so that joint training is performed with the second network device based on the model training configuration information to obtain the target privacy processing model.

In a specific implementation of this application, the service processing request carries privacy processing description reference information, and the first transmitting module is configured to:

determine the model training configuration information based on the privacy processing description reference information.

In a specific implementation of this application, the first sample data is obtained by the first obtaining module 920 through collection from various sample sources based on sample data type information included in the model training configuration information.

In a specific implementation of this application, the second sample data is obtained by the second network device through data collection based on model training filtering information carried in the joint training request message.

In a specific implementation of this application, the service processing apparatus 900 further includes a second transmitting module, configured to:

transmit first model related information of the target privacy processing model to the second network device after the first obtaining module 920 performs, based on the service processing request, first iterative training on the first privacy processing initial model N times until the specified first training termination condition is met, to obtain the target privacy processing model.

In a specific implementation of this application, the first obtaining module 920 is configured to:

transmit a joint training start indication message to the second network device based on the service processing request;

receive second model related information of the target privacy processing model, where the target privacy processing model is a model obtained by the second network device by performing second iterative training on a second privacy processing initial model for M times based on the joint training start indication message until a specified second training termination condition is met, and M a positive integer;

during second iterative training at a $j^{th}$ time, train a first local model, and obtain a third processing result at the $j^{th}$ time by processing a processing result of first sample data based on the trained first local model; and

transmit the third processing result at the $j^{th}$ time to the second network device, where

second iterative training at the $j^{th}$ time is training performed by the second network device on the second privacy processing initial model based on the third processing result at the $j^{th}$ time, a fourth processing result at the $j^{th}$ time, and second label data, where j = 1, 2, ..., M; and

the fourth processing result at the $j^{th}$ time is a result obtained by the second network device by training a second local model and processing second sample data by using the trained second local model.

In a specific implementation of this application, when j = 1, the third processing result at the $j^{th}$ time is a result obtained by the first obtaining module 920 by training the first local model by using the first sample data and processing the processing result of the first sample data based on the trained first local model; and

the fourth processing result at the $j^{th}$ time is a result obtained by the second network device by training the second local model by using the second sample data and processing the second sample data by using the trained second local model.

In a specific implementation of this application, when j = 2, 3, ..., M, the third processing result at the $j^{th}$ time is a result obtained by the first obtaining module 920 by training the first local model by using a third intermediate processing result at a $(j-1)^{th}$ time and processing the processing result of the first sample data based on the trained first local model;

the fourth processing result at the $j^{th}$ time is a result obtained by the second network device by training the second local model by using a fourth intermediate processing result at the $(j-1)^{th}$ time and processing the second sample data by using the trained second local model;

the third intermediate processing result at the $(j-1)^{th}$ time is a result obtained by the second network device by processing a processing result of a third processing result at the $(j-1)^{th}$ time based on the trained second privacy processing initial model after second iterative training is performed for the $(j-1)^{th}$ time; and

the fourth intermediate processing result at the $(j-1)^{th}$ time is a result obtained by the second network device by processing a fourth processing result at the $(j-1)^{th}$ time by using the trained second privacy processing initial model after second iterative training is performed for the $(j-1)^{th}$ time.

In a specific implementation of this application, the first obtaining module 920 is configured to:

after obtaining the processing result of the first sample data at the $j^{th}$ time by using the first local model, perform encryption by using a second public key, to obtain a seventh output result;

transmit seventh interaction information to the second network device, where the seventh interaction information carries the seventh output result and the second public key;

receive eighth interaction information, where the eighth interaction information carries an eighth output result, and the eighth output result is a result obtained through encryption by using the second public key after the second network device performs a third data processing operation on the seventh output result and performs randomization processing;

after decrypting the eighth output result by using a second private key and performing randomization processing on decrypted information, obtain a ninth output result, where the second public key and the second private key are a public-private key pair generated by the first network device; and

determine that the ninth output result is the third processing result at the $j^{th}$ time, and transmit ninth interaction information carrying the third processing result at the $j^{th}$ time to the second network device.

In a specific implementation of this application, the first obtaining module 920 is configured to obtain the third intermediate processing result at the $(j-1)^{th}$ time through the following steps:

receiving tenth interaction information, where the tenth interaction information carries a tenth output result, and the tenth output result is a result obtained through encryption by using a second public key after the second network device processes the third processing result at the (j-1)th time by using the second privacy processing initial model and performs randomization processing;

after decrypting the tenth output result by using a second private key and performing randomization processing on decrypted information, performing encryption by using the second public key, to obtain an eleventh output result, where the second public key and the second private key are a public-private key pair generated by the first network device;

transmitting eleventh interaction information to the second network device, where the eleventh interaction information carries the eleventh output result;

receiving twelfth interaction information, where the twelfth interaction information carries a twelfth output result, and the twelfth output result is a result obtained after the second network device performs a fourth data processing operation on the eleventh output result and performs encryption by using the second public key; and

determining that the twelfth output result is the third intermediate processing result at the (j-1)th time.

In a specific implementation of this application, the first obtaining module 920 is configured to:

determine, based on the service processing request, whether a historical privacy processing model corresponding to the target privacy protection service exists, where the historical privacy processing model is obtained through joint training with the second network device; and

in a case that it is determined that the historical privacy processing model exists, determine that the historical privacy processing model is the target privacy processing model.

In a specific implementation of this application, the first obtaining module 920 is configured to:

in the case that it is determined that the historical privacy processing model exists, determine whether the historical privacy processing model is in a valid state; and

in a case that it is determined that the historical privacy processing model is in the valid state, determine that the historical privacy processing model is the target privacy processing model.

In a specific implementation of this application, the service processing request received by the first receiving module 910 is a request transmitted to the first receiving module 910 in a case that the information exposure device determines, by querying privacy protection service subscription information of the second network device, that the target privacy protection service is authorized after the information exposure device receives the service processing request transmitted by the second network device.

The service processing apparatus 900 provided in this embodiment of this application can implement each process implemented in the method embodiments in FIG. 2 to FIG. 8, with the same technical effect achieved. To avoid repetition, details are not described herein again.

FIG. 10 is an implementation flowchart of another service processing method according to an embodiment of this application. The method may include the following steps.

S1010: A second network device transmits a service processing request for a target privacy protection service to a first network device.

S1020: The second network device receives a service processing result returned by the first network device, where the service processing result is a result obtained after privacy processing is performed, by using a target privacy processing model, on network data related to the target privacy protection service after the first network device obtains, based on the service processing request, the target privacy processing model obtained through joint training with the second network device.

By using the method provided in this embodiment of this application, after the second network device transmits the service processing request for the target privacy protection service to the first network device, the first network device obtains, based on the service processing request, the target privacy processing module obtained through joint training with the second network device, then performs, by using the target privacy processing module, privacy processing on the network data related to the target privacy protection service, and then obtains the service processing result and transmits the service processing result to the second network device. In other words, the service processing result obtained by the second network device is provided after the first network device performs privacy processing on the network data related to the target privacy protection service. This can better protect privacy of internal data of the network and increase an amount of data that a communication network can provide for external applications for use. Therefore, plenty of internal data of the communication network can be effectively used and data utilization can be improved.

In a specific implementation of this application, the target privacy processing model is a model obtained by the first network device by performing first iterative training on a first privacy processing initial model N times based on the service processing request until a specified first training termination condition is met, where N is a positive integer, where

during first iterative training at an $i^{th}$ time, the second network device trains a second local model, and obtains a second processing result at the $i^{th}$ time by processing a processing result of second sample data based on the trained second local model, where i = 1, 2, ..., N;

the second network device transmits the second processing result at the $i^{th}$ time to the first network device;

first iterative training at the $i^{th}$ time is training performed by the first network device on the first privacy processing initial model based on a first processing result at the $i^{th}$ time, the second processing result at the $i^{th}$ time, and first label data; and

the first processing result at the $i^{th}$ time is a result obtained by the first network device by training a first local model and processing first sample data by using the trained first local model.

In a specific implementation of this application, when i = 1, the first processing result at the $i^{th}$ time is a result obtained by the first network device by training the first local model by using the first sample data and processing the first sample data by using the trained first local model; and

the second processing result at the $i^{th}$ time is a result obtained by the second network device by training the second local model by using the second sample data and processing the processing result of the second sample data based on the trained second local model.

In a specific implementation of this application, when i = 2, 3, ..., N, the first processing result at the $i^{th}$ time is a result obtained by the first network device by training the first local model by using a first intermediate processing result at an $(i-1)^{th}$ time and processing the first sample data by using the trained first local model;

the second processing result at the $i^{th}$ time is a result obtained by the second network device by training the second local model by using a second intermediate processing result at the $(i-1)^{th}$ time and processing the processing result of the second sample data based on the trained second local model;

the first intermediate processing result at the $(i-1)^{th}$ time is a result obtained by the first network device by processing a first processing result at the $(i-1)^{th}$ time by using the trained first privacy processing initial model after first iterative training is performed for the $(i-1)^{th}$ time; and

the second intermediate processing result at the $(i-1)^{th}$ time is a result obtained by the first network device by processing a processing result of a second processing result at the $(i-1)^{th}$ time based on the trained first privacy processing initial model after first iterative training is performed for the $(i-1)^{th}$ time.

In a specific implementation of this application, that the second network device transmits the second processing result at the $i^{th}$ time to the first network device includes:

the second network device obtains a first output result after encrypting the processing result of the second sample data at the $i^{th}$ time by the second local model by using a first public key;

the second network device transmits first interaction information to the first network device, where the first interaction information carries the first public key and the first output result;

the second network device receives second interaction information, where the second interaction information carries a second output result, and the second output result is a result obtained through encryption by using the first public key after the first network device performs a first data processing operation on the first output result and performs randomization processing;

after decrypting the second output result by using a first private key and performing randomization processing, the second network device obtains a third output result, where the first public key and the first private key are a public-private key pair generated by the second network device; and

the second network device determines that the third output result is the second processing result at the $i^{th}$ time, and transmits third interaction information carrying the second processing result at the $i^{th}$ time to the first network device.

In a specific implementation of this application, the second intermediate processing result at the $(i-1)^{th}$ time is obtained by the second network device through the following steps:

The second network device receives fourth interaction information, where the fourth interaction information carries a fourth output result, and the fourth output result is a result obtained through encryption by using a first public key after the first network device performs randomization processing on the result obtained by processing the second processing result at the $(i-1)^{th}$ time by using the first privacy processing initial model;

after decrypting the fourth output result by using a first private key and performing randomization processing on decrypted information, the second network device performs encryption by using the first public key, to obtain a fifth output result, where the first public key and the first private key are a public-private key pair generated by the second network device;

the second network device transmits fifth interaction information to the first network device, where the fifth interaction information carries the fifth output result;

the second network device receives sixth interaction information, where the sixth interaction information carries a sixth output result, and the sixth output result is a result obtained through encryption by using the first public key after the first network device performs a second data processing operation on the fifth output result; and

the second network device determines that the sixth output result is the second intermediate processing result at the (i-1)$^{th}$ time.

In a specific implementation of this application, before the second network device trains the second local model and obtains a second processing result at a first time by processing the processing result of the second sample data based on the trained second local model, the method further includes:

the second network device receives a joint training request message transmitted by the first network device, where the joint training request message is transmitted by the first network device in a case that it is determined that a first joint training condition is met, where

in a case that at least one of the following information is determined, the first network device determines that the first joint training condition is met, or else, determines that the first joint training condition is not met:

the service processing request carries joint training indication information, requirement data of the service processing request is private data, and the requirement data of the service processing request has a characteristic of having a same sample but different features.

In a specific implementation of this application, the joint training request message carries model training configuration information, so that joint training is performed with the first network device based on the model training configuration information to obtain the target privacy processing model, where

the model training configuration information is determined by the first network device in a case that it is determined that the first joint training condition is met.

In a specific implementation of this application, the method further includes:

the second network device receives first model related information of the target privacy processing model, where the first model related information is transmitted after the first network device obtains the target privacy processing model by performing first iterative training on the first privacy processing initial model N times based on the service processing request until the specified first training termination condition is met.

In a specific implementation of this application, after the second network device transmits the service processing request for the target privacy protection service to the first network device, the method further includes:

the second network device receives a joint training start indication message transmitted by the first network device;

the second network device performs, based on the joint training start indication message, second iterative training on a second privacy processing initial model for M times until a specified second training termination condition is met, to obtain the target privacy processing model, where M is a positive integer; and

the second network device transmits second model related information of the target privacy processing model to the first network device, where

during second iterative training at a j$^{th}$ time, the second network device trains a second local model, and obtains a fourth processing result of second sample data at the j$^{th}$ time by using the trained second local model;

the second network device obtains a third processing result at the j$^{th}$ time, where the third processing result at the j$^{th}$ time is a result obtained by the first network device by training a first local model and processing a processing result of first sample data based on the trained first local model; and

the second network device performs second iterative training on the second privacy processing initial model for the j$^{th}$ time based on the third processing result at the j$^{th}$ time, the fourth processing result at the j$^{th}$ time, and second label data.

In a specific implementation of this application, when j = 1, the third processing result at the j$^{th}$ time is a result obtained by the first network device by training the first local model by using the first sample data and processing the processing result of the first sample data based on the trained first local model; and

the fourth processing result at the j$^{th}$ time is a result obtained by the second network device by training the second local model by using the second sample data and processing the second sample data by using the trained second local model.

In a specific implementation of this application, when j = 2, 3, ..., M, the third processing result at the j$^{th}$ time is a result obtained by the first network device by training the first local model by using a third intermediate processing result at a (j-1)$^{th}$ time and processing the processing result of the first sample data based on the trained first local model;

the fourth processing result at the j$^{th}$ time is a result obtained by the second network device by training the second local model by using a fourth intermediate processing result at the (j-1)$^{th}$ time and processing the second sample data by using the trained second local model;

the third intermediate processing result at the (j-1)$^{th}$ time is a result obtained by the second network device by processing a processing result of a third processing result at the (j-1)$^{th}$ time based on the trained second privacy processing initial model after second iterative training is performed for the (j-1)$^{th}$ time; and

the fourth intermediate processing result at the (j-1)$^{th}$ time is a result obtained by the second network device by processing a fourth processing result at the (j-1)$^{th}$ time by using the trained second privacy processing initial model after second iterative training is performed for the (j-1)$^{th}$ time.

In a specific implementation of this application, that the second network device obtains a third processing result at the j$^{th}$ time includes:

the second network device receives seventh interaction information, where the seventh interaction information carries a seventh output result and a second public key, where the seventh output result is a result obtained through encryption by using the second public key after the first network device obtains the processing result of the first sample data at the j$^{th}$ time by using the trained first local model;

after performing a third data processing operation on the seventh output result and performing randomization processing, the second network device performs encryption by using the second public key, to obtain an eighth output result;

the second network device transmits eighth interaction information to the first network device, where the eighth interaction information carries the eighth output result;

the second network device receives ninth interaction information, where the ninth interaction information carries a ninth output result, where the ninth output result is a result obtained after the first network device decrypts the eighth output result by using a second private key and performs randomization processing on decrypted information, and the second public key and the second private key are a public-private key pair generated by the first network device; and

the second network device determines that the ninth output result is the third processing result at the j$^{th}$ time.

In a specific implementation of this application, the third intermediate processing result at the (j-1)$^{th}$ time is transmitted by the second network device to the first network device through the following steps:

After processing the third processing result at the (j-1)$^{th}$ time by using the second privacy processing initial model and performing randomization processing, the second network device performs encryption by using a second public key, to obtain a tenth output result;

the second network device transmits tenth interaction information to the first network device, where the tenth interaction information carries the tenth output result;

the second network device receives eleventh interaction information, where the eleventh interaction information carries an eleventh output result, where the eleventh output result is a result obtained through encryption by using the second public key after the first network device decrypts the tenth output result by using a second private key and performs randomization processing on decrypted information, and the second public key and the second private key are a public-private key pair generated by the first network device;

the second network device performs a fourth data processing operation on the eleventh output result, and performs encryption by using the second public key, to obtain a twelfth output result; and

the second network device determines that the twelfth output result is the third intermediate processing result at the (j-1)$^{th}$ time, and transmits twelfth interaction information carrying the third intermediate processing result at the (j-1)$^{th}$ time to the first network device.

In a specific implementation of this application, that the second network device performs second iterative training on the second privacy processing initial model for the j$^{th}$ time based on the third processing result at the j$^{th}$ time, the fourth processing result at the j$^{th}$ time, and second label data includes:

the second network device determines associated data of the first sample data and the second sample data based on obtained identification information of the first sample data and identification information of the second sample data; and

the second network device performs second iterative training on the second privacy processing initial model for the j$^{th}$ time based on processing results of the associated data in the third processing result at the j$^{th}$ time and the fourth processing result at the j$^{th}$ time, and the second label data.

In a specific implementation of this application, the first network device and the second network device exchange information through an information exposure device, and the service processing request transmitted by the second network device is transmitted to the first network device in a case that the information exposure device determines, by querying privacy protection service subscription information of the second network device, that the target privacy protection service is authorized.

For a specific implementation process of the service processing method shown in FIG. 10, reference may be made to each process implemented in the method embodiments in FIG. 2 to FIG. 8, with the same technical effect achieved. To avoid repetition, details are not described herein again.

The service processing method provided in the embodiment of this application shown in FIG. 10 may be performed by a service processing apparatus. A service processing apparatus provided in an embodiment of this application is described by assuming that the service processing method is performed by the service processing apparatus in this embodiment of this application.

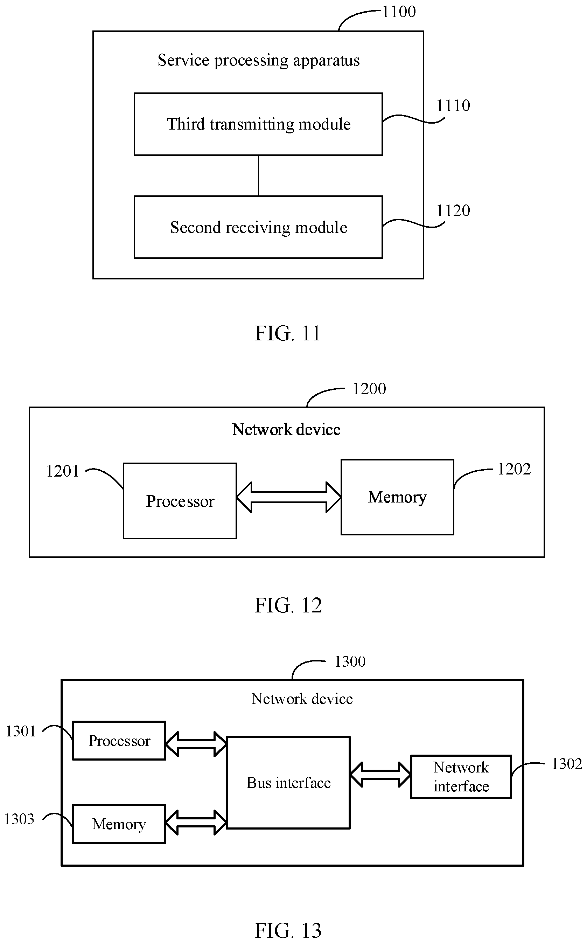

As shown in FIG. 11, a service processing apparatus 1100 may include the following modules:

a third transmitting module 1110, configured to transmit a service processing request for a target privacy protection service to a first network device; and

a second receiving module 1120, configured to receive a service processing result returned by the first network device, where the service processing result is a result obtained after privacy processing is performed, by using a target privacy processing model, on network data related to the target privacy protection service after the first network device obtains, based on the service processing request, the target privacy processing model obtained through joint training with the service processing apparatus 1100.

After the apparatus provided in this embodiment of this application transmits the service processing request for the target privacy protection service to the first network device, the first network device obtains, based on the service processing request, the target privacy processing module obtained through joint training with the service processing apparatus, then performs, by using the target privacy processing module, privacy processing on the network data related to the target privacy protection service, and then obtains the service processing result and transmits the service processing result to the service processing apparatus. In other words, the service processing result obtained by the service processing apparatus is provided after the first network device performs privacy processing on the network data related to the target privacy protection service. This can better protect privacy of internal data of the network and increase an amount of data that a communication network can provide for external applications for use. Therefore, plenty of internal data of the communication network can be effectively used and data utilization can be improved.

In a specific implementation of this application, the service processing apparatus 1100 further includes a second processing module;

the target privacy processing model is a model obtained by the first network device by performing first iterative training on a first privacy processing initial model N times based on the service processing request until a specified first training termination condition is met, where N is a positive integer;

during first iterative training at an $i^{th}$ time, the second processing module is configured to: train a second local model, and obtain a second processing result at the $i^{th}$ time by processing a processing result of second sample data based on the trained second local model, where i = 1, 2, ..., N; and

transmit the second processing result at the $i^{th}$ time to the first network device;

first iterative training at the $i^{th}$ time is training performed by the first network device on the first privacy processing initial model based on a first processing result at the $i^{th}$ time, the second processing result at the $i^{th}$ time, and first label data; and

the first processing result at the $i^{th}$ time is a result obtained by the first network device by training a first local model and processing first sample data by using the trained first local model.

In a specific implementation of this application, when i = 1, the first processing result at the $i^{th}$ time is a result obtained by the first network device by training the first local model by using the first sample data and processing the first sample data by using the trained first local model; and

the second processing result at the $i^{th}$ time is a result obtained by the second processing module by training the second local model by using the second sample data and processing the processing result of the second sample data based on the trained second local model.

In a specific implementation of this application, when i = 2, 3, ..., N, the first processing result at the $i^{th}$ time is a result obtained by the first network device by training the first local model by using a first intermediate processing result at an $(i-1)^{th}$ time and processing the first sample data by using the trained first local model;

the second processing result at the $i^{th}$ time is a result obtained by the second processing module by training the second local model by using a second intermediate processing result at the $(i-1)^{th}$ time and processing the processing result of the second sample data based on the trained second local model;

the first intermediate processing result at the $(i-1)^{th}$ time is a result obtained by the first network device by processing a first processing result at the $(i-1)^{th}$ time by using the trained first privacy processing initial model after first iterative training is performed for the $(i-1)^{th}$ time; and

the second intermediate processing result at the $(i-1)^{th}$ time is a result obtained by the first network device by processing a processing result of a second processing result at the $(i-1)^{th}$ time based on the trained first privacy processing initial model after first iterative training is performed for the $(i-1)^{th}$ time.

In a specific implementation of this application, the second processing module is configured to:

obtain a first output result after encrypting the processing result of the second sample data at the $i^{th}$ time by the second local model by using a first public key;

transmit first interaction information to the first network device, where the first interaction information carries the first public key and the first output result;

receive second interaction information, where the second interaction information carries a second output result, and the second output result is a result obtained through encryption by using the first public key after the first network device performs a first data processing operation on the first output result and performs randomization processing;

after decrypting the second output result by using a first private key and performing randomization processing, obtain a third output result, where the first public key and the first private key are a public-private key pair generated by a second network device; and

determine that the third output result is the second processing result at the $i^{th}$ time, and transmit third interaction information carrying the second processing result at the $i^{th}$ time to the first network device.

In a specific implementation of this application, the second processing module is configured to obtain the second intermediate processing result at the $(i-1)^{th}$ time through the following steps:

receiving fourth interaction information, where the fourth interaction information carries a fourth output result, and the fourth output result is a result obtained through encryption by using a first public key after the first network device performs randomization processing on the result obtained by processing the second processing result at the $(i-1)^{th}$ time by using the first privacy processing initial model;

after decrypting the fourth output result by using a first private key and performing randomization processing on decrypted information, performing encryption by using the first public key, to obtain a fifth output result, where the first public key and the first private key are a public-private key pair generated by the second network device;

transmitting fifth interaction information to the first network device, where the fifth interaction information carries the fifth output result;

receiving sixth interaction information, where the sixth interaction information carries a sixth output result, and the sixth output result is a result obtained through encryption by using the first public key after the first network device performs a second data processing operation on the fifth output result; and

determining that the sixth output result is a second intermediate processing result at the $i^{th}$ time.

In a specific implementation of this application, the service processing apparatus 1100 further includes a third receiving module, configured to:

before the second processing module trains the second local model and obtains a second processing result at a first time by processing the processing result of the second sample data based on the trained second local model, receive a joint training request message transmitted by the first network device, where the joint training request message is transmitted by the first network device in a case that it is determined that a first joint training condition is met, where in a case that at least one of the following information is determined, the first network device determines that the first joint training condition is met, or else, determines that the first joint training condition is not met:

the service processing request carries joint training indication information, requirement data of the service processing request is private data, and the requirement data of the service processing request has a characteristic of having a same sample but different features.

In a specific implementation of this application, the joint training request message carries model training configuration information, so that joint training is performed with the first network device based on the model training configuration information to obtain the target privacy processing model, where

the model training configuration information is determined by the first network device in a case that it is determined that the first joint training condition is met.

In a specific implementation of this application, the service processing apparatus 1100 further includes a fourth receiving module, configured to:

receive first model related information of the target privacy processing model, where the first model related information is transmitted after the first network device obtains the target privacy processing model by performing first iterative training on the first privacy processing initial model N times based on the service processing request until the specified first training termination condition is met.

In a specific implementation of this application, the service processing apparatus 1100 further includes a third processing module, configured to:

after the third transmitting module 1110 transmits the service processing request for the target privacy protection service to the first network device, receive a joint training start indication message transmitted by the first network device;

perform, based on the joint training start indication message, second iterative training on a second privacy processing initial model for M times until a specified second training termination condition is met, to obtain the target privacy processing model, where M is a positive integer; and

transmit second model related information of the target privacy processing model to the first network device, where during second iterative training at a $j^{th}$ time, the second network device trains a second local model, and obtains a fourth processing result of second sample data at the $j^{th}$ time by using the trained second local model;

obtains a third processing result at the $j^{th}$ time, where the third processing result at the $j^{th}$ time is a result obtained by the first network device by training a first local model and processing a processing result of first sample data based on the trained first local model; and

performs second iterative training on the second privacy processing initial model for the $j^{th}$ time based on the third processing result at the $j^{th}$ time, the fourth processing result at the $j^{th}$ time, and second label data.

In a specific implementation of this application, when j = 1, the third processing result at the $j^{th}$ time is a result obtained by the first network device by training the first local model by using the first sample data and processing the processing result of the first sample data based on the trained first local model; and

the fourth processing result at the $j^{th}$ time is a result obtained by the third processing module by training the second local model by using the second sample data and processing the second sample data by using the trained second local model.

In a specific implementation of this application, when j = 2, 3, ..., M, the third processing result at the $j^{th}$ time is a result obtained by the first network device by training the first local model by using a third intermediate processing result at a $(j-1)^{th}$ time and processing the processing result of the first sample data based on the trained first local model;

the fourth processing result at the $j^{th}$ time is a result obtained by the third processing module by training the second local model by using a fourth intermediate processing result at the $(j-1)^{th}$ time and processing the second sample data by using the trained second local model;

the third intermediate processing result at the $(j-1)^{th}$ time is a result obtained by the third processing module by processing a processing result of a third processing result at the $(j-1)^{th}$ time based on the trained second privacy processing initial model after second iterative training is performed for the $(j-1)^{th}$ time; and

the fourth intermediate processing result at the $(j-1)^{th}$ time is a result obtained by the third processing module by processing a fourth processing result at the $(j-1)^{th}$ time by using the trained second privacy processing initial model after second iterative training is performed for the $(j-1)^{th}$ time.

In a specific implementation of this application, the third processing module is configured to:

receive seventh interaction information, where the seventh interaction information carries a seventh output result and a second public key, where the seventh output result is a result obtained through encryption by using the second public key after the first network device obtains the processing result of the first sample data at the $j^{th}$ time by using the trained first local model;

after performing a third data processing operation on the seventh output result and performing randomization processing, perform encryption by using the second public key, to obtain an eighth output result;

transmit eighth interaction information to the first network device, where the eighth interaction information carries the eighth output result;

receive ninth interaction information, where the ninth interaction information carries a ninth output result, where the ninth output result is a result obtained after the first network device decrypts the eighth output result by using a second private key and performs randomization processing on decrypted information, and the second public key and the second private key are a public-private key pair generated by the first network device; and

determine that the ninth output result is the third processing result at the $j^{th}$ time.

In a specific implementation of this application, the third processing module is configured to transmit the third intermediate processing result at the $(j-1)^{th}$ time to the first network device through the following steps:

after processing the third processing result at the $(j-1)^{th}$ time by using the second privacy processing initial model and performing randomization processing, performing encryption by using a second public key, to obtain a tenth output result;

transmitting tenth interaction information to the first network device, where the tenth interaction information carries the tenth output result;

receiving eleventh interaction information, where the eleventh interaction information carries an eleventh output result, where the eleventh output result is a result obtained through encryption by using the second public key after the first network device decrypts the tenth output result by using a second private key and performs randomization processing on decrypted information, and the second public key and the second private key are a public-private key pair generated by the first network device;

performing a fourth data processing operation on the eleventh output result, and performing encryption by using the second public key, to obtain a twelfth output result; and

determining that the twelfth output result is the third intermediate processing result at the $(j-1)^{th}$ time, and transmitting twelfth interaction information carrying the third intermediate processing result at the $(j-1)^{th}$ time to the first network device.

In a specific implementation of this application, the third processing module is configured to:

determine associated data of the first sample data and the second sample data based on obtained identification information of the first sample data and identification information of the second sample data; and

perform second iterative training on the second privacy processing initial model for the $j^{th}$ time based on processing results of the associated data in the third processing result at the $j^{th}$ time and the fourth processing result at the $j^{th}$ time, and the second label data.

In a specific implementation of this application, the first network device and the service processing apparatus 1100 exchange information through an information exposure device, and the service processing request transmitted by the third transmitting module 1110 is transmitted to the first network device in a case that the information exposure device determines, by querying privacy protection service subscription information of the service processing apparatus 1100, that the target privacy protection service is authorized.

The service processing apparatus 1100 provided in this embodiment of this application can implement each process implemented in the method embodiment in FIG. 10, with the same technical effect achieved. To avoid repetition, details are not described herein again.

Optionally, as shown in FIG. 12, an embodiment of this application further provides a network device 1200, including a processor 1201 and a memory 1202. The memory 1202 stores a program or instructions capable of running on the processor 1201. When the program or instructions are executed by the processor 1201, the steps of the foregoing embodiment of the service processing method shown in FIG. 2 or the steps of the foregoing embodiment of the service processing method shown in FIG. 10 are implemented, with the same technical effect achieved. To avoid repetition, details are not described herein again.

An embodiment of this application further provides a network device, including a processor and a communication interface. The processor is configured to implement the steps of the embodiment of the service processing method shown in FIG. 2 or the steps of the foregoing embodiment of the service processing method shown in FIG. 10. The communication interface is configured to exchange information.

Specifically, an embodiment of this application further provides a network device. As shown in FIG. 13, the network device 1300 includes a processor 1301, a network interface 1302, and a memory 1303. The network interface 1302 is, for example, a common public radio interface (common public radio interface, CPRI).

Specifically, the network device 1300 in this embodiment of this application further includes a program or instructions stored in the memory 1303 and capable of running on the processor 1301. When the processor 1301 invokes the program or instructions in the memory 1303, the steps of the method of the method embodiment shown in FIG. 2 or FIG. 10 are performed, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment shown in FIG. 2 or FIG. 10 is implemented, with the same technical effect achieved. To avoid repetition, details are not described herein again.

The processor is the processor in the network device described in the foregoing embodiment. The readable storage medium includes a computer-readable storage medium, such as a computer read-only memory ROM, a random access memory RAM, a magnetic disk, or an optical disc.

In addition, an embodiment of this application provides a computer program or program product. The computer program or program product is stored in a storage medium. The computer program or program product is executed by at least one processor to implement each process of the foregoing method embodiment in FIG. 2 or FIG. 10, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A service processing method, comprising:

    receiving, by a first network device, a service processing request of a second network device for a target privacy protection service;
    obtaining, by the first network device based on the service processing request, a target privacy processing model obtained through joint training with the second network device; and
    performing, by the first network device by using the target privacy processing model, privacy processing on network data related to the target privacy protection service, and then transmitting the network data to the second network device.

2. The service processing method according to claim 1, wherein the obtaining, by the first network device based on the service processing request, a target privacy processing model obtained through joint training with the second network device comprises:

    performing, by the first network device based on the service processing request, first iterative training on a first privacy processing initial model N times until a specified first training termination condition is met, to obtain the target privacy processing model, wherein N is a positive integer, wherein
    during first iterative training at an $i^{th}$ time, the first network device trains a first local model, and obtains a first processing result of first sample data at the $i^{th}$ time by using the trained first local model, wherein i = 1, 2, ..., N;
    the first network device obtains a second processing result at the $i^{th}$ time, wherein the second processing result at the $i^{th}$ time is a result obtained by the second network device by training a second local model and processing a processing result of second sample data based on the trained second local model; and
    the first network device performs first iterative training on the first privacy processing initial model for the $i^{th}$ time based on the first processing result at the $i^{th}$ time, the second processing result at the $i^{th}$ time, and first label data.

3. The service processing method according to claim 2, wherein when i = 1, the first processing result at the $i^{th}$ time is a result obtained by the first network device by training the first local model by using the first sample data and processing the first sample data by using the trained first local model; and

the second processing result at the $i^{th}$ time is a result obtained by the second network device by training the second local model by using the second sample data and processing the processing result of the second sample data based on the trained second local model.

4. The service processing method according to claim 2, wherein when i = 2, 3, ..., N, the first processing result at the $i^{th}$ time is a result obtained by the first network device by training the first local model by using a first intermediate processing result at an $(i-1)^{th}$ time and processing the first sample data by using the trained first local model;

the second processing result at the $i^{th}$ time is a result obtained by the second network device by training the second local model by using a second intermediate processing result at the $(i-1)^{th}$ time and processing the processing result of the second sample data based on the trained second local model;
the first intermediate processing result at the $(i-1)^{th}$ time is a result obtained by the first network device by processing a first processing result at the $(i-1)^{th}$ time by using the trained first privacy processing initial model after first iterative training is performed for the $(i-1)^{th}$ time; and
the second intermediate processing result at the $(i-1)^{th}$ time is a result obtained by the first network device by processing a processing result of a second processing result at the $(i-1)^{th}$ time based on the trained first privacy processing initial model after first iterative training is performed for the $(i-1)^{th}$ time.

5. The service processing method according to claim 2, wherein that the first network device performs first iterative training on the first privacy processing initial model for the $i^{th}$ time based on the first processing result at the $i^{th}$ time, the second processing result at the $i^{th}$ time, and first label data comprises:

the first network device determines associated data of the first sample data and the second sample data based on identification information of the first sample data and obtained identification information of the second sample data; and
the first network device performs first iterative training on the first privacy processing initial model for the $i^{th}$ time based on processing results of the associated data in the first processing result at the $i^{th}$ time and the second processing result at the $i^{th}$ time, and the first label data.

6. The service processing method according to claim 2, wherein that the first network device obtains a second processing result at the $i^{th}$ time comprises:

the first network device receives first interaction information, wherein the first interaction information carries a first public key and a first output result, wherein the first output result is a result obtained after the second network device encrypts the processing result of the second sample data at the $i^{th}$ time by the second local model by using the first public key;
after performing a first data processing operation on the first output result and performing randomization processing, the first network device performs encryption by using the first public key, to obtain a second output result;
the first network device transmits second interaction information to the second network device, wherein the second interaction information carries the second output result;
the first network device receives third interaction information, wherein the third interaction information carries a third output result, wherein the third output result is a result obtained after the second network device decrypts the second output result by using a first private key and performs randomization processing, and the first public key and the first private key are a public-private key pair generated by the second network device; and
the first network device determines that the third output result is the second processing result at the $i^{th}$ time.

7. The service processing method according to claim 4, wherein the second intermediate processing result at the $(i-1)^{th}$ time is transmitted by the first network device to the second network device through the following steps:

the first network device performs randomization processing on the result obtained by processing the second processing result at the $(i-1)^{th}$ time by using the first privacy processing initial model, and then performs encryption by using a first public key, to obtain a fourth output result;

the first network device transmits fourth interaction information to the second network device, wherein the fourth interaction information carries the fourth output result;

the first network device receives fifth interaction information, wherein the fifth interaction information carries a fifth output result, wherein the fifth output result is a result obtained through encryption by using the first public key after the second network device decrypts the fourth output result by using a first private key and performs randomization processing on decrypted information, and the first public key and the first private key are a public-private key pair generated by the second network device;

after performing a second data processing operation on the fifth output result, the first network device performs encryption by using the first public key, to obtain a sixth output result; and

the first network device determines that the sixth output result is the second intermediate processing result at the $(i-1)^{th}$ time, and transmits sixth interaction information carrying the second intermediate processing result at the $(i-1)^{th}$ time to the second network device.

8. The service processing method according to claim 2, wherein before the performing, by the first network device based on the service processing request, first iterative training on a first privacy processing initial model N times, the method further comprises:

determining, by the first network device, whether a first joint training condition is met; and

in a case that it is determined that the first joint training condition is met, transmitting, by the first network device, a joint training request message to the second network device, wherein

in a case that at least one of the following information is determined, the first network device determines that the first joint training condition is met, or else, determines that the first joint training condition is not met:

the service processing request carries joint training indication information, requirement data of the service processing request is private data, and the requirement data of the service processing request has a characteristic of having a same sample but different features.

9. The service processing method according to claim 8, further comprising:

in a case that it is determined that the first joint training condition is met, determining, by the first network device, model training configuration information; and

carrying, by the first network device, the model training configuration information in the joint training request message, so that joint training is performed with the second network device based on the model training configuration information to obtain the target privacy processing model.

10. The service processing method according to claim 9, wherein the service processing request carries privacy processing description reference information, and the determining, by the first network device, model training configuration information comprises:
determining, by the first network device, the model training configuration information based on the privacy processing description reference information.

11. The service processing method according to claim 9, wherein the first sample data is obtained by the first network device through collection from various sample sources based on sample data type information comprised in the model training configuration information.

12. The service processing method according to claim 8, wherein the second sample data is obtained by the second network device through data collection based on model training filtering information carried in the joint training request message.

13. The service processing method according to claim 2, wherein after the performing, by the first network device based on the service processing request, first iterative training on a first privacy processing initial model N times until a specified first training termination condition is met, to obtain the target privacy processing model, the method further comprises:
transmitting, by the first network device, first model related information of the target privacy processing model to the second network device.

14. The service processing method according to claim 1, wherein the obtaining, by the first network device based on the service processing request, a target privacy processing model obtained through joint training with the second network device comprises:

transmitting, by the first network device, a joint training start indication message to the second network device based on the service processing request; and

receiving, by the first network device, second model related information of the target privacy processing model, wherein the target privacy processing model is a model obtained by the second network device by performing second iterative training on a second privacy processing initial model M times based on the joint training start indication message until a specified second training termination condition is met, and M is a positive integer, wherein

during second iterative training at a $j^{th}$ time, the first network device trains a first local model, and obtains a third processing result at the $j^{th}$ time by processing a processing result of first sample data based on the trained first local model;

the first network device transmits the third processing result at the $j^{th}$ time to the second network device;

second iterative training at the $j^{th}$ time is training performed by the second network device on the second privacy processing initial model based on the third processing result at the $j^{th}$ time, a fourth processing result at the $j^{th}$ time, and second label data, wherein $j = 1, 2, ..., M$; and

the fourth processing result at the $j^{th}$ time is a result obtained by the second network device by training a second local model and processing second sample data by using the trained second local model.

15. The service processing method according to claim 14, wherein when j

= 1, the third processing result at the $j^{th}$ time is a result obtained by the first network device by training the first local model by using the first sample data and processing the processing result of the first sample data based on the trained first local model; and

the fourth processing result at the $j^{th}$ time is a result obtained by the second network device by training the second local model by using the second sample data and processing the second sample data by using the trained second local model.

16. The service processing method according to claim 14, wherein when j = 2, 3, ..., M, the third processing result at the $j^{th}$ time is a result obtained by the first network device by training the first local model by using a third intermediate processing result at a $(j-1)^{th}$ time and processing the processing result of the first sample data based on the trained first local model;

the fourth processing result at the $j^{th}$ time is a result obtained by the second network device by training the second local model by using a fourth intermediate processing result at the $(j-1)^{th}$ time and processing the second sample data by using the trained second local model;

the third intermediate processing result at the $(j-1)^{th}$ time is a result obtained by the second network device by processing a processing result of a third processing result at the $(j-1)^{th}$ time based on the trained second privacy processing initial model after second iterative training is performed for the $(j-1)^{th}$ time; and

the fourth intermediate processing result at the $(j-1)^{th}$ time is a result obtained by the second network device by processing a fourth processing result at the $(j-1)^{th}$ time by using the trained second privacy processing initial model after second iterative training is performed for the $(j-1)^{th}$ time.

17. The service processing method according to claim 14, wherein that the first network device transmits the third processing result at the $j^{th}$ time to the second network device comprises:

after obtaining the processing result of the first sample data at the $j^{th}$ time by using the first local model, the first network device performs encryption by using a second public key, to obtain a seventh output result;

the first network device transmits seventh interaction information to the second network device, wherein the seventh interaction information carries the seventh output result and the second public key;

the first network device receives eighth interaction information, wherein the eighth interaction information carries an eighth output result, and the eighth output result is a result obtained through encryption by using the second public key after the second network device performs a third data processing operation on the seventh output result and performs randomization processing;

after decrypting the eighth output result by using a second private key and performing randomization processing on decrypted information, the first network device obtains a ninth output result, wherein the second public key and the second private key are a public-private key pair generated by the first network device; and

the first network device determines that the ninth output result is the third processing result at the $j^{th}$ time, and transmits ninth interaction information carrying the third processing result at the $j^{th}$ time to the second network device.

**18.** The service processing method according to claim 16, wherein the third intermediate processing result at the (j-1)<sup>th</sup> time is obtained by the first network device through the following steps:

the first network device receives tenth interaction information, wherein the tenth interaction information carries a tenth output result, and the tenth output result is a result obtained through encryption by using a second public key after the second network device processes the third processing result at the $(j-1)^{th}$ time by using the second privacy processing initial model and performs randomization processing;

after decrypting the tenth output result by using a second private key and performing randomization processing on decrypted information, the first network device performs encryption by using the second public key, to obtain an eleventh output result, wherein the second public key and the second private key are a public-private key pair generated by the first network device;

the first network device transmits eleventh interaction information to the second network device, wherein the eleventh interaction information carries the eleventh output result;

the first network device receives twelfth interaction information, wherein the twelfth interaction information carries a twelfth output result, and the twelfth output result is a result obtained after the second network device performs a fourth data processing operation on the eleventh output result and performs encryption by using the second public key; and

the first network device determines that the twelfth output result is the third intermediate processing result at the $(j-1)^{th}$ time.

**19.** The service processing method according to claim 1, wherein the obtaining, by the first network device based on the service processing request, a target privacy processing model obtained through joint training with the second network device comprises:

determining, by the first network device based on the service processing request, whether a historical privacy processing model corresponding to the target privacy protection service exists, wherein the historical privacy processing model is obtained through joint training with the second network device; and

in a case that it is determined that the historical privacy processing model exists, determining, by the first network device, that the historical privacy processing model is the target privacy processing model.

**20.** The service processing method according to claim 19, wherein the determining, by the first network device, that the historical privacy processing model is the target privacy processing model in a case that it is determined that the historical privacy processing model exists comprises:

in the case that it is determined that the historical privacy processing model exists, determining, by the first network device, whether the historical privacy processing model is in a valid state; and

in a case that it is determined that the historical privacy processing model is in the valid state, determining, by the first network device, that the historical privacy processing model is the target privacy processing model.

**21.** The service processing method according to any one of claims 1 to 20, wherein the first network device and the second network device exchange information through an information exposure device, and the service processing request received by the first network device is a request transmitted to the first network device in a case that the information exposure device determines, by querying privacy protection service subscription information of the second network device, that the target privacy protection service is authorized after the information exposure device receives the service processing request transmitted by the second network device.

**22.** A service processing apparatus, comprising:

a first receiving module, configured to receive a service processing request of a second network device for a target privacy protection service;

a first obtaining module, configured to obtain, based on the service processing request, a target privacy processing model obtained through joint training with the second network device; and

a first processing module, configured to perform, by using the target privacy processing model, privacy processing on network data related to the target privacy protection service, and then transmit the network data to the second network device.

**23.** A service processing method, comprising:

transmitting, by a second network device, a service processing request for a target privacy protection service to a first network device; and

receiving, by the second network device, a service processing result returned by the first network device, wherein the service processing result is a result obtained after privacy processing is performed, by using a target privacy processing model, on network data related to the target privacy protection service after the first network device obtains, based on the service processing request, the target privacy processing model obtained through joint training with the second network device.

24. The service processing method according to claim 23, wherein the target privacy processing model is a model obtained by the first network device by performing first iterative training on a first privacy processing initial model N times based on the service processing request until a specified first training termination condition is met, wherein N is a positive integer, wherein

during first iterative training at an $i^{th}$ time, the second network device trains a second local model, and obtains a second processing result at the $i^{th}$ time by processing a processing result of second sample data based on the trained second local model, wherein $i = 1, 2, ..., N$;

the second network device transmits the second processing result at the $i^{th}$ time to the first network device;

first iterative training at the $i^{th}$ time is training performed by the first network device on the first privacy processing initial model based on a first processing result at the $i^{th}$ time, the second processing result at the $i^{th}$ time, and first label data; and

the first processing result at the $i^{th}$ time is a result obtained by the first network device by training a first local model and processing first sample data by using the trained first local model.

25. The service processing method according to claim 24, wherein when $i = 1$, the first processing result at the $i^{th}$ time is a result obtained by the first network device by training the first local model by using the first sample data and processing the first sample data by using the trained first local model; and

the second processing result at the $i^{th}$ time is a result obtained by the second network device by training the second local model by using the second sample data and processing the processing result of the second sample data based on the trained second local model.

26. The service processing method according to claim 24, wherein when $i = 2, 3, ..., N$, the first processing result at the $i^{th}$ time is a result obtained by the first network device by training the first local model by using a first intermediate processing result at an $(i-1)^{th}$ time and processing the first sample data by using the trained first local model;

the second processing result at the $i^{th}$ time is a result obtained by the second network device by training the second local model by using a second intermediate processing result at the $(i-1)^{th}$ time and processing the processing result of the second sample data based on the trained second local model;

the first intermediate processing result at the $(i-1)^{th}$ time is a result obtained by the first network device by processing a first processing result at the $(i-1)^{th}$ time by using the trained first privacy processing initial model after first iterative training is performed for the $(i-1)^{th}$ time; and

the second intermediate processing result at the $(i-1)^{th}$ time is a result obtained by the first network device by processing a processing result of a second processing result at the $(i-1)^{th}$ time based on the trained first privacy processing initial model after first iterative training is performed for the $(i-1)^{th}$ time.

27. The service processing method according to claim 24, wherein that the second network device transmits the second processing result at the $i^{th}$ time to the first network device comprises:

the second network device obtains a first output result after encrypting the processing result of the second sample data at the $i^{th}$ time by the second local model by using a first public key;

the second network device transmits first interaction information to the first network device, wherein the first interaction information carries the first public key and the first output result;

the second network device receives second interaction information, wherein the second interaction information carries a second output result, and the second output result is a result obtained through encryption by using the first public key after the first network device performs a first data processing operation on the first output result and performs randomization processing;

after decrypting the second output result by using a first private key and performing randomization processing, the second network device obtains a third output result, wherein the first public key and the first private key are a public-private key pair generated by the second network device; and

the second network device determines that the third output result is the second processing result at the $i^{th}$ time, and transmits third interaction information carrying the second processing result at the $i^{th}$ time to the first network device.

28. The service processing method according to claim 26, wherein the second intermediate processing result at the $(i-1)^{th}$ time is obtained by the second network device through the following steps:

the second network device receives fourth interaction information, wherein the fourth interaction information carries a fourth output result, and the fourth output result is a result obtained through encryption by using a first public key after the first network device performs randomization processing on the result obtained by processing the second processing result at the $(i-1)^{th}$ time by using the first privacy processing initial model;

after decrypting the fourth output result by using a first private key and performing randomization processing on decrypted information, the second network device performs encryption by using the first public key, to obtain a fifth output result, wherein the first public key and the first private key are a public-private key pair generated by the second network device;

the second network device transmits fifth interaction information to the first network device, wherein the fifth interaction information carries the fifth output result;

the second network device receives sixth interaction information, wherein the sixth interaction information carries a sixth output result, and the sixth output result is a result obtained through encryption by using the first public key after the first network device performs a second data processing operation on the fifth output result; and

the second network device determines that the sixth output result is the second intermediate processing result at the $(i-1)^{th}$ time.

29. The service processing method according to claim 24, wherein before the second network device trains the second local model and obtains a second processing result at a first time by processing the processing result of the second sample data based on the trained second local model, the method further comprises:

receiving, by the second network device, a joint training request message transmitted by the first network device, wherein the joint training request message is transmitted by the first network device in a case that it is determined that a first joint training condition is met, wherein

in a case that at least one of the following information is determined, the first network device determines that the first joint training condition is met, or else, determines that the first joint training condition is not met:

the service processing request carries joint training indication information, requirement data of the service processing request is private data, and the requirement data of the service processing request has a characteristic of having a same sample but different features.

30. The service processing method according to claim 29, wherein the joint training request message carries model training configuration information, so that joint training is performed with the first network device based on the model training configuration information to obtain the target privacy processing model, wherein

the model training configuration information is determined by the first network device in a case that it is determined that the first joint training condition is met.

31. The service processing method according to claim 24, further comprising:

receiving, by the second network device, first model related information of the target privacy processing model, wherein the first model related information is transmitted after the first network device obtains the target privacy processing model by performing first iterative training on the first privacy processing initial model N times based on the service processing request until the specified first training termination condition is met.

32. The service processing method according to claim 23, wherein after the transmitting, by a second network device, a service processing request for a target privacy protection service to a first network device, the method further comprises:

receiving, by the second network device, a joint training start indication message transmitted by the first network device;

performing, by the second network device based on the joint training start indication message, second iterative training on a second privacy processing initial model M times until a specified second training termination condition is met, to obtain the target privacy processing model, wherein M is a positive integer; and

transmitting, by the second network device, second model related information of the target privacy processing model to the first network device, wherein

during second iterative training at a j$^{th}$ time, the second network device trains a second local model, and obtains a fourth processing result of second sample data at the j$^{th}$ time by using the trained second local model;

the second network device obtains a third processing result at the j$^{th}$ time, wherein the third processing result at the j$^{th}$ time is a result obtained by the first network device by training a first local model and processing a processing result of first sample data based on the trained first local model; and

the second network device performs second iterative training on the second privacy processing initial model for the j$^{th}$ time based on the third processing result at the j$^{th}$ time, the fourth processing result at the j$^{th}$ time, and second label data.

33. The service processing method according to claim 32, wherein when j = 1, the third processing result at the j$^{th}$ time is a result obtained by the first network device by training the first local model by using the first sample data and processing the processing result of the first sample data based on the trained first local model; and

the fourth processing result at the j$^{th}$ time is a result obtained by the second network device by training the second local model by using the second sample data and processing the second sample data by using the trained second local model.

34. The service processing method according to claim 32, wherein when j = 2, 3, ..., M, the third processing result at the j$^{th}$ time is a result obtained by the first network device by training the first local model by using a third intermediate processing result at a (j-1)$^{th}$ time and processing the processing result of the first sample data based on the trained first local model;

the fourth processing result at the j$^{th}$ time is a result obtained by the second network device by training the second local model by using a fourth intermediate processing result at the (j-1)$^{th}$ time and processing the second sample data by using the trained second local model;

the third intermediate processing result at the (j-1)$^{th}$ time is a result obtained by the second network device by processing a processing result of a third processing result at the (j-1)$^{th}$ time based on the trained second privacy processing initial model after second iterative training is performed for the (j-1)$^{th}$ time; and

the fourth intermediate processing result at the (j-1)$^{th}$ time is a result obtained by the second network device by processing a fourth processing result at the (j-1)$^{th}$ time by using the trained second privacy processing initial model after second iterative training is performed for the (j-1)$^{th}$ time.

35. The service processing method according to claim 32, wherein that the second network device obtains a third processing result at the j$^{th}$ time comprises:

the second network device receives seventh interaction information, wherein the seventh interaction information carries a seventh output result and a second public key, wherein the seventh output result is a result obtained through encryption by using the second public key after the first network device obtains the processing result of the first sample data at the j$^{th}$ time by using the trained first local model;

after performing a third data processing operation on the seventh output result and performing randomization processing, the second network device performs encryption by using the second public key, to obtain an eighth output result;

the second network device transmits eighth interaction information to the first network device, wherein the eighth interaction information carries the eighth output result;

the second network device receives ninth interaction information, wherein the ninth interaction information carries a ninth output result, wherein the ninth output result is a result obtained after the first network device decrypts the eighth output result by using a second private key and performs randomization processing on decrypted information, and the second public key and the second private key are a public-private key pair generated by the first network device; and

the second network device determines that the ninth output result is the third processing result at the j$^{th}$ time.

36. The service processing method according to claim 34, wherein the third intermediate processing result at the (j-1)$^{th}$ time is transmitted by the second network device to the first network device through the following steps:

after processing the third processing result at the (j-1)$^{th}$ time by using the second privacy processing initial model and performing randomization processing, the second network device performs encryption by using a second public key, to obtain a tenth output result;

the second network device transmits tenth interaction information to the first network device, wherein the tenth interaction information carries the tenth output result;

the second network device receives eleventh interaction information, wherein the eleventh interaction information carries an eleventh output result, wherein the eleventh output result is a result obtained through encryption by using the second public key after the first network device decrypts the tenth output result by using a second private key and performs randomization processing on decrypted information, and the second public key and the second private key are a public-private key pair generated by the first network device;

the second network device performs a fourth data processing operation on the eleventh output result, and performs encryption by using the second public key, to obtain a twelfth output result; and

the second network device determines that the twelfth output result is the third intermediate processing result at the $(j-1)^{th}$ time, and transmits twelfth interaction information carrying the third intermediate processing result at the $(j-1)^{th}$ time to the first network device.

37. The service processing method according to claim 32, wherein that the second network device performs second iterative training on the second privacy processing initial model for the $j^{th}$ time based on the third processing result at the $j^{th}$ time, the fourth processing result at the $j^{th}$ time, and second label data comprises:

the second network device determines associated data of the first sample data and the second sample data based on obtained identification information of the first sample data and identification information of the second sample data; and

the second network device performs second iterative training on the second privacy processing initial model for the $j^{th}$ time based on processing results of the associated data in the third processing result at the $j^{th}$ time and the fourth processing result at the $j^{th}$ time, and the second label data.

38. The service processing method according to any one of claims 23 to 37, wherein the first network device and the second network device exchange information through an information exposure device, and the service processing request transmitted by the second network device is transmitted to the first network device in a case that the information exposure device determines, by querying privacy protection service subscription information of the second network device, that the target privacy protection service is authorized.

39. A service processing apparatus, comprising:

a third transmitting module, configured to transmit a service processing request for a target privacy protection service to a first network device; and

a second receiving module, configured to receive a service processing result returned by the first network device, wherein the service processing result is a result obtained after privacy processing is performed, by using a target privacy processing model, on network data related to the target privacy protection service after the first network device obtains, based on the service processing request, the target privacy processing model obtained through joint training with the service processing apparatus.

40. A network device, comprising a processor and a memory, wherein the memory stores a program or instructions capable of running on the processor, and when the program or instructions are executed by the processor, the steps of the service processing method according to any one of claims 1 to 21 are implemented, or the steps of the service processing method according to any one of claims 23 to 38 are implemented.

41. A readable storage medium, wherein the readable storage medium stores a program or instructions, and when the program or instructions are executed by a processor, the steps of the service processing method according to any one of claims 1 to 21 are implemented, or the steps of the service processing method according to any one of claims 23 to 38 are implemented.

**EP 4 535 209 A1**

FIG. 1

FIG. 2

44

FIG. 3

```
┌─────────────────┐     ┌─────────────────┐     ┌─────────────────┐
│  Network entity │     │   Information   │     │       AF        │
│                 │     │ exposure device │     │                 │
└────────┬────────┘     └────────┬────────┘     └────────┬────────┘
         │                       │                       │
         │                       │              ┌────────┴─────────────┐
         │                       │              │ Generate a first public key and │
         │                       │              │    a first private key          │
         │                       │              └────────┬─────────────┘
         │                       │              ┌────────┴─────────────┐
         │                       │              │ Encrypt processing result 2 by │
         │                       │              │ using the first public key, to │
         │                       │              │    obtain output result 1       │
         │                       │              └────────┬─────────────┘
```

Interaction information 1 {output result 1,
sample data IDs, first public key}

Perform a first data processing
operation on output result 1, add
noise, and perform encryption by
using the first public key, to
obtain output result 2

Interaction information 2 {output
result 2, sample data IDs}

Decrypt output result 2 by using
the first private key and add
noise to obtain output result 3

Interaction information 3 {output
result 3, sample data IDs}

FIG. 4

Network entity | Information exposure device | AF

Add noise to intermediate processing result 2 and perform encryption by using a first public key, to obtain output result 4

Interaction information 4 {output result 4, sample data IDs}

Decrypt output result 4 by using a first private key, add noise, and perform encryption by using the first public key, to obtain output result 5

Interaction information 5 {output result 5, sample data IDs}

Perform a second data processing operation on output result 5 and perform encryption by using the first public key, to obtain output result 6

Interaction information 6 {output result 6, sample data IDs}

FIG. 5

| Network entity | Information exposure device | AF |
|---|---|---|

Service processing request

Determine whether a target privacy protection service is authorized

Service processing request

Determine whether a second joint training condition is met

Joint training start indication message

Train a first local mode, and obtain processing result 3 based on the first local model

Train a second local model, and obtain processing result 4 based on the second local model

Encrypt and transmit processing result 3

Iteratively train a second privacy processing initial model based on processing result 3, processing result 4, and second label data, and further obtain intermediate processing result 3 and intermediate processing result 4 based on the second privacy processing initial model

Encrypt and transmit intermediate processing result 3

Update and train the first local model by using intermediate processing result 3, and obtain new processing result 3 based on the first local model

Update and train the second local model by using intermediate processing result 4, and obtain new processing result 4 based on the second local model

Obtain a target privacy processing model

Second model related information of the target privacy processing model

Perform privacy processing on network data by using the target privacy processing model

Network data after privacy processing

FIG. 6

```
┌──────────────────┐      ┌──────────────────┐      ┌──────────────────┐
│                  │      │   Information    │      │                  │
│  Network entity  │      │ exposure device  │      │        AF        │
│                  │      │                  │      │                  │
└────────┬─────────┘      └────────┬─────────┘      └────────┬─────────┘
```

┌─────────────────────────────┐
│ Generate a second public key │
│   and a second private key   │
└─────────────────────────────┘

┌─────────────────────────────┐
│ Encrypt processing result 3 by │
│ using the second public key, to │
│   obtain output result 7     │
└─────────────────────────────┘

Interaction information 7 {output result 7,
sample data IDs, second public key}

┌─────────────────────────────┐
│ Perform a third data processing │
│ operation on output result 7, add │
│ noise, and perform encryption by │
│ using the second public key, to │
│   obtain output result 8     │
└─────────────────────────────┘

Interaction information 8 {output
result 8, sample data IDs}

┌─────────────────────────────┐
│ Decrypt output result 8 by using │
│ the second private key and add │
│ noise to obtain output result 9 │
└─────────────────────────────┘

Interaction information 9 {output
result 9, sample data IDs}

FIG. 7

| Network entity | Information exposure device | AF |
|---|---|---|

AF: Add noise to intermediate processing result 3 and perform encryption by using a second public key, to obtain output result 10

Interaction information 10 {output result 10, sample data IDs}

Network entity: Decrypt output result 10 by using a second private key, add noise, and perform encryption by using the second public key, to obtain output result 11

Interaction information 11 {output result 11, sample data IDs}

AF: Perform a fourth data processing operation on output result 11 and perform encryption by using the second public key, to obtain output result 12

Interaction information 12 {output result 12, sample data IDs}

FIG. 8

900

Service processing apparatus

First receiving module 910

First obtaining module 920

First processing module 930

FIG. 9

A second network device transmits a service processing request for a target privacy protection service to a first network device S1010

The second network device receives a service processing result returned by the first network device, where the service processing result is a result obtained after privacy processing is performed, by using a target privacy processing model, on network data related to the target privacy protection service after the first network device obtains, based on the service processing request, the target privacy processing model obtained through joint training with the second network device S1020

FIG. 10

1100

Service processing apparatus

Third transmitting module — 1110

Second receiving module — 1120

FIG. 11

1200

Network device

1201 — Processor ⟺ Memory — 1202

FIG. 12

1300

Network device

1301 — Processor ⟺ Bus interface ⟺ Network interface — 1302

1303 — Memory ⟺

FIG. 13

## INTERNATIONAL SEARCH REPORT

International application No.

**PCT/CN2023/096721**

### A. CLASSIFICATION OF SUBJECT MATTER

G06F 21/60(2013.01)i

According to International Patent Classification (IPC) or to both national classification and IPC

### B. FIELDS SEARCHED

Minimum documentation searched (classification system followed by classification symbols)

IPC: G06F,H04W

Documentation searched other than minimum documentation to the extent that such documents are included in the fields searched

Electronic data base consulted during the international search (name of data base and, where practicable, search terms used)

CJFD, CNTXT, ENTXT, DWPI: 隐私, 秘密, 私密, 数据, 保护, 模型, 训练, 联合, 业务, 请求, privacy, protection, secret, data, model, training, servie, network

### C. DOCUMENTS CONSIDERED TO BE RELEVANT

| Category* | Citation of document, with indication, where appropriate, of the relevant passages | Relevant to claim No. |
|---|---|---|
| X | CN 110874491 A (ALIPAY (HANGZHOU) INFORMATION TECHNOLOGY CO., LTD.) 10 March 2020 (2020-03-10) description, paragraphs 28-86 | 1, 19-23, 38-41 |
| A | CN 112395643 A (RENMIN UNIVERSITY OF CHINA) 23 February 2021 (2021-02-23) entire document | 1-41 |
| A | CN 113935061 A (JUNIPER NETWORKS, INC.) 14 January 2022 (2022-01-14) entire document | 1-41 |
| A | CN 114337984 A (RESEARCH INSTITUTE OF CHINA MOBILE COMMUNICATIONS CORPORATION et al.) 12 April 2022 (2022-04-12) entire document | 1-41 |
| A | WO 2021184347 A1 (PLATON CO., LIMITED) 23 September 2021 (2021-09-23) entire document | 1-41 |

☐ Further documents are listed in the continuation of Box C.     ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **05 July 2023** | **05 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/096721**

| Patent document cited in search report | | | Publication date (day/month/year) | Patent family member(s) | | | Publication date (day/month/year) |
|---|---|---|---|---|---|---|---|
| CN | 110874491 | A | 10 March 2020 | CN | 111475851 | A | 31 July 2020 |
| | | | | HK | 40034496 | A0 | 30 April 2021 |
| CN | 112395643 | A | 23 February 2021 | None | | | |
| CN | 113935061 | A | 14 January 2022 | US | 2022021659 | A1 | 20 January 2022 |
| | | | | EP | 3941013 | A1 | 19 January 2022 |
| CN | 114337984 | A | 12 April 2022 | None | | | |
| WO | 2021184347 | A1 | 23 September 2021 | None | | | |

Form PCT/ISA/210 (patent family annex) (July 2022)

**REFERENCES CITED IN THE DESCRIPTION**

**Patent documents cited in the description**

- CN 202210618596